# EUROPÄISCHE PATENTSCHRIFT

(11) **EP 4 446 182 B1**
(45) Veröffentlichungstag und Bekanntmachung des Hinweises auf die Patenterteilung: **04.02.2026**
(21) Anmeldenummer: 24194897.5
(22) Anmeldetag: 30.12.2015
(51) Int. Cl.: B60T 13/74

(54) **BREMSANLAGE MIT TEILSIMULTANEM DRUCKABBAU IM OFFENEN UND GESCHLOSSENEN SYSTEM**
BRAKING SYSTEM WITH PARTIALLY ADULT PRESSURE REDUCTION IN OPEN AND CLOSED SYSTEM
SYSTÈME DE FREINAGE À DÉCOMPRESSION PARTIELLEMENT SIMULTANÉE EN SYSTÈME OUVERT ET FERMÉ

(30) Priorität: 16.03.2015 DE 202015107072 U; 16.03.2015 DE 202015107075 U; 16.03.2015 DE 202015107079 U
(43) Veröffentlichungstag der Anmeldung: 16.10.2024
(62) Teilanmeldung aus: 23207002.9
(73) Patentinhaber: IPGATE AG, 8808 Pfäffikon SZ (CH)
(72) Erfinder: LEIBER, Thomas, 22203 Rogoznica (HR); LEIBER, Heinz, 71739 Oberriexingen (DE)
(74) Vertreter: Meissner Bolte Partnerschaft mbB

(56) Entgegenhaltungen:
- WO-A1-2010/091883
- DE-A1- 102013 014 188
- DE-A1- 102013 210 563

## Beschreibung

Die Erfindung betrifft Verfahren zum kontrollierten Druckabbau in Radbremsen.

### Stand der Technik

Aus WO 2010/091883A1, WO2006/111392A1 und WO2010/091883 A1 sind Bremsanlagen bekannt, bei denen im ABS-Betrieb der Druck in den Radbremsen zeitgleich oder in einem geschlossenen Multiplexverfahren nacheinander eingestellt wird. Dies erfolgt über ein Schaltventil sowie über die positionsgeregelte Steuerung eines angetriebenen Kolbens zum Druckauf- und Druckabbau unter Berücksichtigung der Druckvolumenkennlinie jeder einzelnen Radbremse. Vorzugsweise werden Schaltventile mit geringem Strömungswiderstand in Verbindung zur Radbremse eingesetzt. Der Druck kann dabei sequentiell oder simultan in einem oder mehreren Radbremsen verändert werden. Zur Steuerung wird ein Drucksensor verwendet, der den Druck in der hydraulischen Verbindung zwischen Kolben- Zylinder-Einheit und Radbremsen misst.

Vorteil dieses Verfahrens ist die sehr präzise Druckregelung, insbesondere bei niedrigen Reibwerten und bei Rekuperation. Zudem kann der Aufwand an Ventilen deutlich reduziert werden, da anstatt je einem Einlass- und je einem Auslassventil pro Radbremse nur ein Schaltventil benötigt wird. Nachteilig bei den aus diesen beiden Dokumenten bekannten Bremsanlagen sind die hohen Anforderungen an den Elektromotor. So muss dieser u.a. eine geringe Trägheitsmasse sowie ein hohes Drehmoment für Reversierbetrieb aufweisen. Aus DE 10 2012 002 791 A1 ist eine Radbremse vorbekannt, dessen Grundaufbau mit Hauptbremszylinder und Trennventilen im Markt als MKC1, siehe auch DE 10 2013 224313 A1, bekannt ist.

Der Multiplexbetrieb ist dabei derart gestaltet, dass sowohl Hauptbremszylinder als auch Druckversorgereinheit jeweils über Trennventile mit den Bremskreisen verbunden sind.

Vorteil dieser Anordnung ist der modulare Aufbau und der Einsatz von Standardkomponenten (Hauptbremszylinder), sowie der Einsatz einer separaten Druckversorgereinheit. In dieser Anordnung kommt es zu keinen Differenzdrücken in den Bremskreisen, da die Druckversorgereinheit über Trennventile mit den Bremskreisen verbunden sind und es über die Zwischenschaltung eines Kolbens zur Medientrennung zu keinen Differenzdrücken kommt.

Nachteilig ist jedoch der hohe Aufwand an Komponenten. So wird u.a. eine große Anzahl von Ventilen, ein aufwändiger Hauptbremszylinder mit zwei Kammern und ein Simulator benötigt.

In der DE 102014117727 wird das in DE 10 2012 002 791 A1 beschriebene Bremssystem um eine neuartige Druckversorgereinheit ergänzt, die einen Doppelhubkolben aufweist, welcher im Vor- und Rückhub betrieben wird und im Vorhub einen andere hydraulische Querschnittsfläche als im Rückhub aufweist und mit dem ein kontrollierter Druckabbau möglich ist.

Vorteil dieser Ausführung ist die kontinuierliche Förderung durch die Druckerzeugereinheit, sowie das Motordownsizingpotential in klassischen Bremsanlagen mit Einlass- und Auslassventilen durch Nutzung einer kleineren hydraulischen Fläche. Aufgrund der hohen Dynamikanforderungen für das Motordrehmoment für den Einsatz im Regelbetrieb kann der Vorteil des Downsizings jedoch nicht genutzt werden und somit die Bremsanlage nicht vorteilhaft minimiert werden.

Ferner sind aus dem Stand der Technik verschiedene Hauptbremszylinderausführungen mit Wegsimulator bekannt, die mit zwei Kolben oder drei Kolben sowie einem Wegsimulator aufgebaut sind. Vorteilhafte Ausführungen der Hauptbremszylinder sehen entsprechende Ventilschaltungen für den Wegsimulator (Abschaltung in Rückfallebene, Funktionsventile, Einspeisung bei Rückfallebene) sowie Trennventile zu den Bremskreisen zur Entkoppelung des Pedals im Brake-by-Wire-Betrieb vor. Hier wird nur beispielhaft auf DE 10 2013 216477 A1 verwiesen. Weitere Bremssysteme sind aus DE 10 2015 103859 (MUX mit zwei Kolben), vorbekannt.

Das in dieser Erfindung beschriebene Druckregelmodul funktioniert mit allen o.g. Brake-by-Wire Hauptbremszylinderausführungen mit Wegsimulator und wird im Folgenden daher nicht näher ausgeführt. Unterschiede in der Hauptbremszylinderausführung sind im Wesentlichen dadurch begründet, dass unterschiedliche Kundenwünsche hinsichtlich Pedalrückwirkung vorherrschen und Automobilzulieferer Standardkomponenten im Hauptbremszylinder einsetzen möchten und bestimmte Ausführung ein oder mehrere Trennventile zur Druckversorgereinheit benötigen.

Aus DE10 2013 216477 A1 ist ein Dreikolben-THZ mit Ventilschaltung für die Druckversorgungseinheit und Druckregelung für ABS bekannt. Im Normalbetrieb ist der zweite Druckraum drucklos, und der dritte dem SK-Kolben zugeordnet. Dieser verharrt in seiner Ausgangsstellung. Die Druckregelung erfolgt im HA-Kreis mit MUX und im Vorderachskreis bedarfsweise mit MUX oder zwei zusätzlichen Auslassventilen, die bei Pab-Funktion das Druckmittel über ein zusätzliches Ventil zum Vorratsbehälter leitet. Die Druckregelung im Multiplexbetrieb erfolgt nicht über die aus WO2006/111392A1 bekannte Volumenmessung, sondern über PWM der sog. Radventile unter ständiger Druckmessung mittels Druckgeber.

### Aufgabe der Erfindung

Aufgabe der vorliegenden Erfindung ist es, eine kostengünstige Bremsanlage mit hoher Regelgüte und Regelungsperformance bereitzustellen.

### Lösung der Aufgabe

Die Aufgabe der Erfindung wird mit Verfahren mit den Merkmalen der unabhängigen Ansprüche gelöst. Vorteilhafte Ausführungen bzw. Ausgestaltungen der Erfindung ergeben sich durch Merkmale der Unteransprüche.

Die erfindungsgemäße Bremsanlage zeichnet sich durch eine signifikante Verbesserung gegenüber vorbekannten Bremsanlagen mit Multiplexregelung, welche mit 4 Schaltventilen oder 8-Ventiltechnik mit Einlass- und Auslassventilen für ABS, ausgebildet sind. Die erfindungsgemäße Bremsanlage ist vorteilhaft in Kombination mit unterschiedlichen Hauptbremszylinderkonzepten eines Brake- by-Wire-Bremssystems universell einsetzbar.

Die erfindungsgemäße Bremsanlage zeichnet sich durch einen hochdynamischen MUX-Betrieb aus und ermöglicht eine große Performancesteigerung und eine große Kostenreduzierung durch die minimale Anzahl an Ventilen, wobei vorteilhaft einfacher Schaltventile auf Basis modifizierter Einlassventile zum Einsatz kommen können. Auch werden nur wenige Druckgeber/Sensoren benötigt. Von besonderem Vorteil ist es, dass lediglich ein kleiner kostengünstiger Motor als Antrieb für die Druckversorgereinheit benötigt wird.

Durch die Erfindung wird vorteilhaft ein Druckregelmodul mit Druckregelung bereitgestellt, das sich durch hohe Druckregelgüte, hohe Dynamik durch kurze Zykluszeit, spezielle einfache Gestaltung der strömungsarmen Schaltventile mit vorteilhafter Anströmung, sowie eine Reduzierung der Anforderungen an den Motor der Druckversorgereinheit und minimale Strömungswiderstände auszeichnet.

Dies wird mit einer kompakt bauenden Bremsanlage geschaffen, die die Vorteile eines Multiplexers in Form von einer hohen Regelgüte in der Druckregelung durch Druckvolumensteuerung in verschiedenen Betriebsmodi wie z. B. Rekuperation, ABS, ESP, ASR um neuartige Druckabbau- und Druckaufbau Regelungskonzepte erweitert, die mit wenigen Auslassventilen zur Reduzierung der Zykluszeit im temporär offenen Bremskreis auskommt.

Die gestellten Anforderungen werden erfindungsgemäß dadurch erfüllt, dass durch Betrieb im geschlossen und teilweise offenen Bremskreis mit minimaler Ventilanzahl und vorzugsweise einer vorteilhaften Gestaltung der Druckerzeugereinheit mit einem intelligenten Aufbau der Druckerzeugereinheit mit Druckkolben welcher nur einen Arbeitsraum begrenzt oder einem Doppelhubkolben, welcher zwei Arbeitsräume begrenzt.

Folgende Grundideen liegen der erfindungsgemäßen Bremsanlage zugrunde:
- Druckregelung im geschlossenen und teilweise offenen Bremskreis mit minimalen Volumenverlust im ABS-Regelbetrieb;
- Druckaufbau und Druckabbau mit vielen Freiheitsgraden, hoher Regelgüte und Dynamik mit Schaltventilen und lediglich einem Auslassventil in nur einem oder beiden Bremskreisen;
- teilweise gleichzeitiger Druckaufbau und Druckabbau im geschlossen Bremskreis unter Verwendung eines Doppelhubkolben in der Druckversorgungseinheit;
- Nutzung der Strommessung des Elektromotors der Druckversorgungseinheit für indirekte Druckmessung und Nutzung insbesondere in der Druckabbau- und Druckaufbauregelung in zwei Bremskreisen;
- Genauer druckgesteuerter Druckabbau mittels Druckmessung über Druckgeber über Druckversorgereinheit und Ventile, die Druckversorgereinheit mit Vorratsbehälter verbinden (Doppelhubkolben mit PD1, PD3-Ventil);
- Neuartige Gestaltung der Druckversorgereinheit in der Ausführung als Doppelhubkolben mit Vorfülleffekt, Nutzung unterschiedlicher hydraulischer Flächen insbesondere beim Druckaufbau bei hohen Drücken;
- Minimierung des Betriebs im offenen Bremskreis durch vorzugsweise Regelung im Multiplexbetrieb im geschlossenen Bremskreis.

Bei der erfindungsgemäßen Bremsanlage müssen selbstverständlich nicht alle der vorgenannten Ideen verwirklicht sein, wesentlich ist jedoch, dass lediglich maximal ein Auslassventil pro Bremskreis und je ein Schaltventil pro Radbremse zum Druckauf- und zum Druckabbau vorgesehen sind, wodurch vorteilhaft die Anzahl der notwendigen Ventile kleiner als acht ist, welche bei einem herkömmlichen ABS-System notwendig sind.

Die erfindungsgemäße Bremsanlage weist zudem ein neues intelligentes Multiplexverfahren auf, welches einen weitestgehend zeitgleichen Druckabbau in mehreren Radbremsen über Zeitsteuerung des Auslassventils bzw. der Auslassventile vorsieht und auch optional simultanen Druckabbau und Druckaufbau in unterschiedlichen Bremskreisen ermöglicht.

Der Erfindung liegt der Grundsatz zugrunde, dass im Normalbetrieb mit geringen Dynamikanforderungen und hoher Druckstellpräzisionsanforderung, insbesondere bei der normalen Bremskraftverstärkung, Rekuperation, ABS auf Low- µ in allen Radbremsen bzw. Radbremszylindern der Druck über Wegsteuerung des Kolbens der Druckversorgereinheit unter Berücksichtigung der Druck- Volumen-Kennlinie(n) simultan oder sequentiell auf- und abgebaut wird. Dabei kommt keine PWM-Steuerung der Schaltventile oder eine vereinfachte Ventilschaltung zum Einsatz. Stattdessen sind die den Radbremsen zugeordneten Schaltventile bei der Druckeinstellung stets die ganze Zeit über geöffnet und werden nach Erreichen des gewünschten bzw. vorgegebenen Solldrucks geschlossen, um den Bremsdruck in den Radbremsen zu halten. In Betriebssituationen mit hohen Dynamikanforderungen, wie z. B. ABS bei High-µ, µ-Split, ESP und ASR, wird der Druck grundsätzlich in allen Radbremszylindern immer mit Druckvolumensteuerung im Multiplexbetrieb, d.h. simultan oder sequentiell aufgebaut. Auch hier kommt keine PWM-Steuerung der Schaltventile zum Einsatz, sondern erfolgt der Druckabbau bei einem Teil der Radbremsen im Multiplexbetrieb Druck simultan oder sequentiell während in der einen bzw. den beiden Radbremsen über das jeweils zugeordnete Auslassventil der Druck in das Vorratsbehältnis erfolgt, wobei das jeweilige Auslassventil nur für eine zuvor bestimmte Zeit geöffnet wird, damit sich in dieser Zeit der Druck in der Radbremse bis zum Soll-Druck abbauen kann. Ebenso kann der Druckabbau über einen Arbeitsraum der Druckversorgereinheit und von dort über ein Schaltventil hin zum Vorratsbehältnis erfolgen. Das Schaltventil wird ebenfalls zeitgesteuert, so dass sich in der vorbestimmten Zeit, in der das Ventil geöffnet ist, der Druck hin zum Soll-Druck abbauen kann. Der Druckabbau in anderen Radbremsen kann zeitgleich über die Volumensteuerung mittels des Kolbens der Druckversorgereinheit erfolgen.

Die Druckabbauregelung im Multiplexbetrieb im geschlossenen Bremskreis wird gegenüber dem Stand der Technik dahingehend erweitert, dass beim simultanen Druckabbau in zwei Radbremsen die Schaltventile SV simultan oder zeitlich versetzt geöffnet werden, wobei das Schaltventil desjenigen Rades, das einen höheren Druck hat, vorzeitig geöffnet wird.

Der Druckabbau im offenen Bremskreis erfolgt vorzugsweise über Zeitsteuerung der Auslassventile zum Vorratsbehältnis. Durch Druckabbau über Auslassventile ist der Bremskreis kurzzeitig geöffnet.

Durch die o.g. Erweiterungen kann der Multiplexer bzw. die Druckversorgereinheit stark entlastet werden und zugleich die Regelgüte durch kürzere Zykluszeiten erhöht werden.

Somit kann der Druck in einem Bremskreis schnell abgebaut werden, indem durch Öffnen des Auslassventils der einen Radbremse der Druck abgebaut wird und gleichzeitig der Druck in der anderen Radbremse des Bremskreises mittels der Druckversorgereinheit abgebaut wird. Bei einem herkömmlichen Multiplexer ohne entsprechendes Auslassventil hätte der Druckabbau in den beiden Radbremsen eines Bremskreises zeitlich nacheinander erfolgen müssen, und würde somit mindestens doppelt so lange dauern.

Auch kann das Auslassventil vorteilhaft für den Druckabbau in beiden Radbremsen des Bremskreises genutzt werden, wenn sowohl das Auslassventil als auch die beiden den Radbremsen zugeordneten Schaltventile im Multiplexbetrieb geöffnet werden.

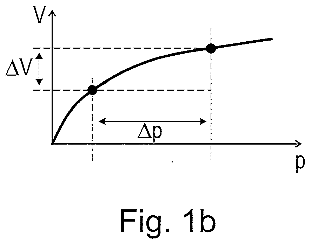

Vorzugsweise wird nur ein Auslassventil in einem Bremskreis eingesetzt, insbesondere zur Vereinfachung der Regelung im Bremskreis II. So wird ein Auslassventil (AV3, Fig. 1b) zum Druckabbau in einem oder 2 Radbremszylindern genutzt. Für einen Abbau in zwei Radbremsen über ein Auslassventil ist der Radbremszylinder von der Druckversorgereinheit abgetrennt. Gleichzeitig kann der Druck im Bremskreis BK I und BK II über Druckvolumensteuerung der Radbremsen simultan oder sequentiell aufgebaut oder abgebaut werden. Dieser Freiheitsgrad führt zu einer signifikanten Reduzierung der Zykluszeit der Druckstellung von vier Radbremsen und wirkt sich insbesondere bei Extremsituationen, wie z.B. wechselndes µ, insbesondere im highp Bereich, sehr vorteilhaft auf die Regelgüte (Abweichung der Radgeschwindigkeiten von der Fahrzeuggeschwindigkeit) aus und führt zu kürzeren Bremswegen. Zudem wird der Volumenverlust im Bremskreis minimiert, weil im Regelbetrieb nur sehr wenig Volumen verloren geht. Dies hat vorteilhafte Auswirkungen auf eine kleine Dimensionierung des Volumens der Druckversorgereinheit.

Die vorgestellten Voll-MUX-Systeme aus dem Stand der Technik haben bekanntlich das Problem des gleichzeitigen Druckabbaus Pabl wenn das Druckniveau in den Radbremsen sehr unterschiedlich ist. Viele setzen die Volumensteuerung zur Drucksteuerung unter Auswertung der Druck-Volumen-Kennlinie der Räder / Radzylinder ein. Der Zeitverlust beim Druckabbau pab der Räder / Radbremsen, insbesondere der Vorderachse soll jedoch möglichst klein sein. Durch die Umschaltzeiten der bekannten MUX-Systeme erfolgt jedoch eine deutliche Zeitverschiebung durch die benötigte Umschaltzeit im Multiplexbetrieb. Infolge des hohen Bremskraftanteils der Vorderachse (V) ist diese besonders anspruchsvoll für eine gute Regelung, was bedeutet, dass die Räder immer hochdynamisch und nahezu mit optimalem Bremsdruck nahe dem Schlupfoptimum betrieben werden sollen. Die erfindungsgemäße Bremsanlage wird diesen Ansprüchen besonders gerecht, sofern die vorbeschriebene hochdynamische Regelstrategie mit Volumen und Zeitsteuerung verwendet wird.

Weiterhin galt als (kleiner) Nachteil bei den vorbeschriebenen vorbekannten Bremsanlagen, dass kein Druckaufbau pauf erfolgen kann, wenn ein Rad einen Druckabbau pab verlangte. Als Alternative zu Voll-MUX werden Teil-MUX- Systeme vorgeschlagen, in denen ein BK mit MUX und der zweite BK mit konventionellen EV- und AV-Ventilen konzipiert ist.

Ein wesentlicher Nachteil der Auslassventile (AV-Ventile) ist die schlechtere Genauigkeit der Drucksteuerung, Druckschwingungen und die Geräuschbildung. Bei der oben beschriebenen Regelstrategie wird vorwiegend der leise und volumengesteuerte Multiplexbetrieb eingesetzt. Die Auslassventile werden nicht kontinuierlich benötigt und werden relativ selten eingesetzt.

Dies wird erreicht durch eine Prioritätssteuerung des Multiplexers mit erster Priorität für die Vorderachse und zusätzlicher Verwendung des Auslassventils AV mit ungedrosseltem Rücklauf in den Vorratsbehälter. Für die Hinterachse erfolgt der Druckabbau pab mit dem Multiplexer mit 2. Priorität. Alternativ hierzu kann ein Druckabbau pab an der Hinterachse mit genauer Zeitsteuerung der Schaltventile erfolgen, wodurch nur ein geringer Zeitverzug entsteht.

Während der ganzen Regelung wird zu Beginn des Druckabbaus der Druck aller Räder gespeichert, so dass die MUX-Steuerung der Druckversorgereinheit (DE) sofort auf den optimalen Steuerdruck umschalten kann. Eine genaue Zeitsteuerung der Auslassventile gegenüber dem Stand der Technik ist dadurch möglich, weil die Druckdifferenz bekannt ist und aus der Druck- Volumen-Kennlinie auch das Volumen und damit die Durchflussmenge für die Zeitsteuerung des Auslassventils oder eines Schaltventils bestimmt werden kann. Druckschwingungen gegen Ende der Druckänderung können ergänzend durch Druckabbauunterstützung durch eine entsprechende Kolbensteuerung der Druckversorgereinheit reduziert werden.

Die zeitlichen Abläufe der Verfahren werden in den Figuren später eingehend gezeigt und erläutert.

Unter der Volumensteuerung wird erfindungsgemäß verstanden, dass die Steuerungseinrichtung die aktuellen Druckniveaus, die Druck-Volumen- Kennlinien sowie die Ziel-Solldrücke für die jeweiligen Radbremse(n) auswertet und anhand dieser Daten das notwendige Fördervolumen berechnet, welches mittels der Druckversorgereinheit bereitgestellt werden muss. Anhand dieses Fördervolumens wird dann der notwendige Verstellweg des Kolbens der Druckversorgereinheit bestimmt. Bei entsprechender Ventilschaltung und Ausführung der Druckversorgereinheit ist es möglich, einen Druckaufbau Pauf in einem Bremskreis und gleichzeitig einen Druckabbau pab in einem anderen Bremskreis zu realisieren. Bisher waren die für den Multiplexbetrieb benötigten Ventile durch die Anforderungen an Differenzdruck und Durchflussquerschnitt durch große Dimensionierung des Magnetkreises teurer. Durch entsprechende Anströmung des Magnetventils vom Bremskreis in den Ankerraum und anschließend über den Ventilsitz zum Radzylinder kann bei der erfindungsgemäßen Bremsanlage vorteilhaft ein kostengünstiges Standard-Magnetventil eingesetzt werden.

Zur Unterstützung der Regelung wird ein Drucksensor für die Druckbestimmung in einem Bremskreis verwendet. Der Druck im anderen Bremskreis kann bei Trennung durch ein Trennventil über das bekannte Verfahren über Phasenstrommessung des Elektromotors indirekt ermittelt werden. Die Genauigkeit der Druckschätzung wird zusätzlich erhöht, wenn ein Temperatursensor im den Kolben antreibenden Elektromotor angeordnet wird, da sich die Drehmomentkonstante proportional zur Temperatur verändert. Bei bekannter Querschnittfläche des Hauptbremszylinders, Getriebeübersetzung kann über den proportionalen Zusammenhang zwischen Phasenstrom und Drehmoment des Elektromotors der Druck berechnet werden.

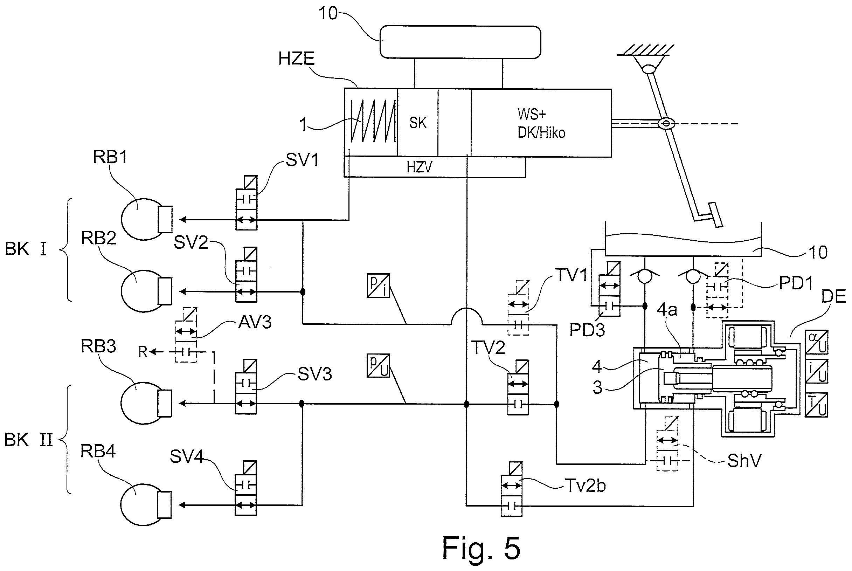

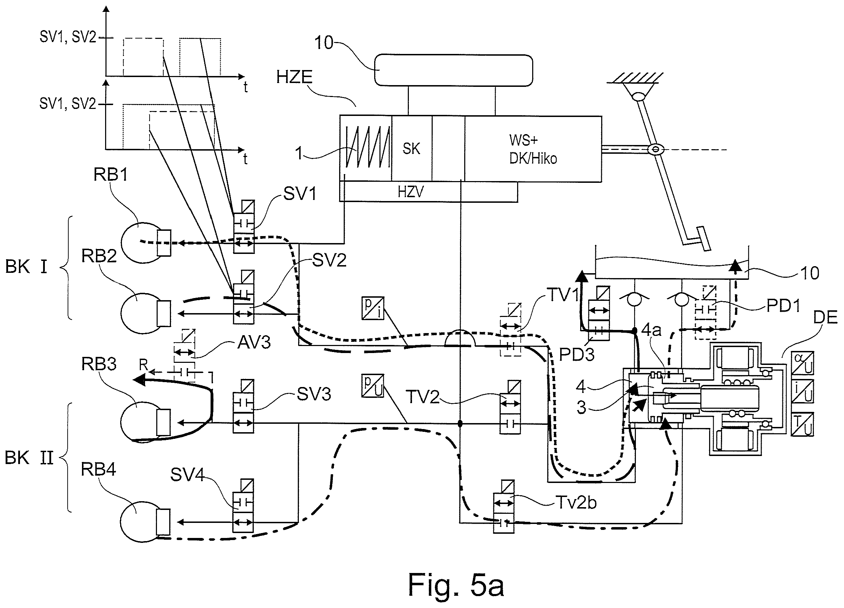

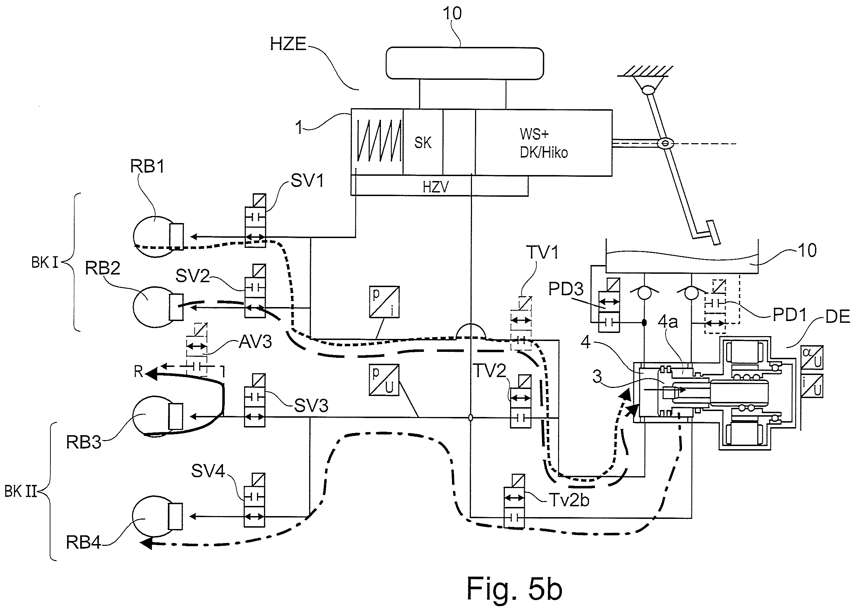

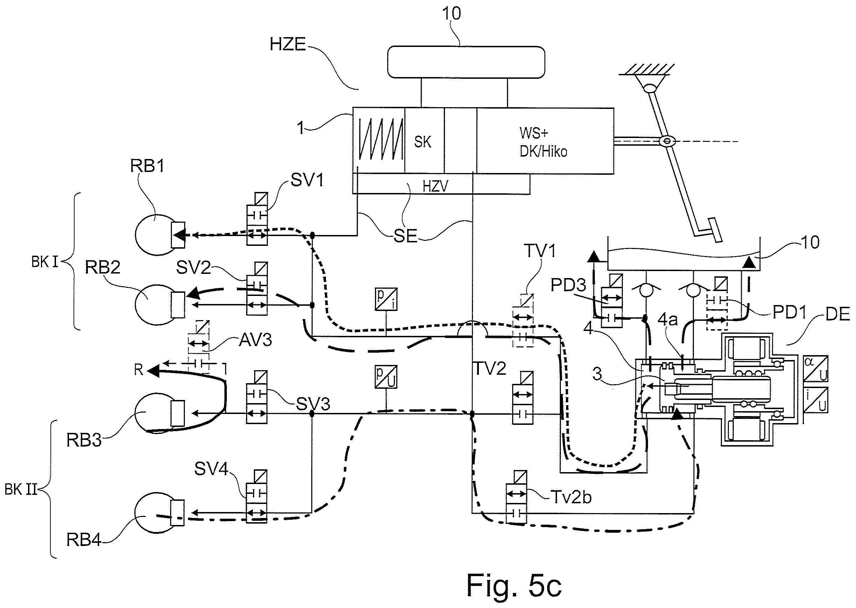

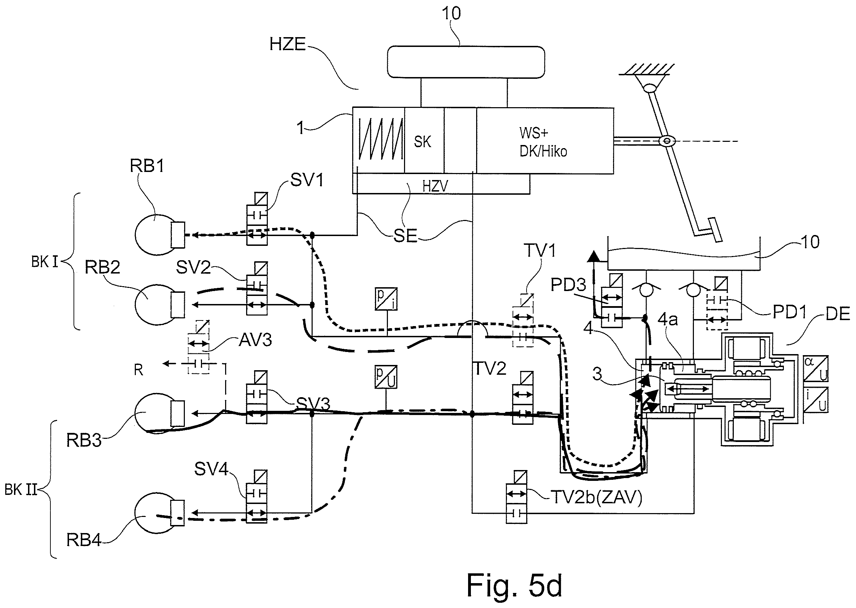

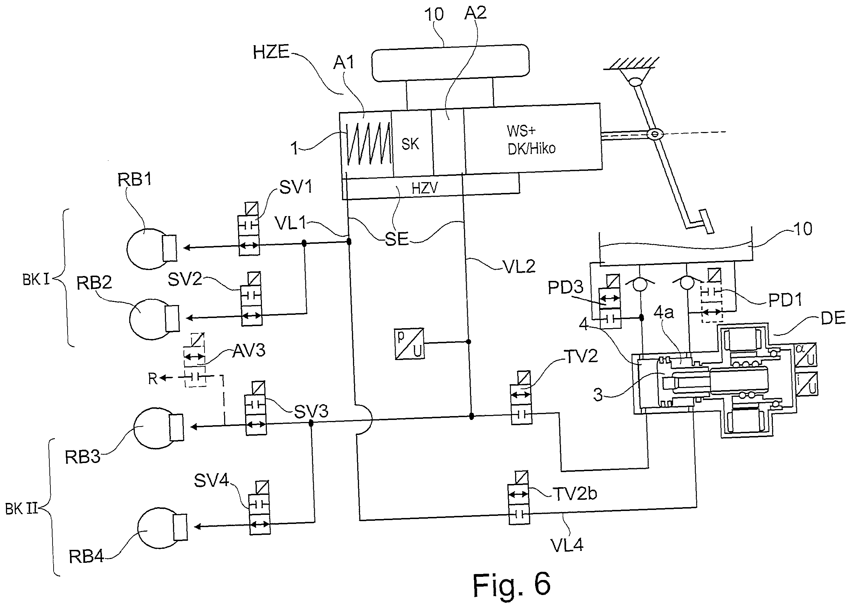

Vorteilhaft für die erfindungsgemäße Bremsanlage ist der Einsatz eines Doppelhubkolbens, mit dem Druck im Multiplexbetrieb auf- und abgebaut werden kann. Auch ist es von Vorteil, wenn ein weiteres Ventil (TV2b, bzw. ZAV) für den Druckabbau in die zweite Kammer (4a, Fig. 5) des Doppelhubkolbens zur Verfügung steht. Insbesondere beim Doppelhubkolben ist der Einsatz eines oder mehrerer Druckabbauventile (PD3, PD1 Figuren 5a-5d, Figur 6) sinnvoll, damit der Druck im Bremssystem weitestgehend im geschlossen Betrieb abgebaut werden und der Druckabbau auch bei hohen Drücken geräuscharm erfolgen kann. Dies ist insbesondere im Bremskraftverstärkerbetrieb mit Fading und Druckabbau im Stillstand nach ABS-Eingriff wünschenswert.

Der Druckabbau erfolgt dann entweder über den Kolbenrückhub, den druckgeregelten Druckabbau mittels Druckmessung über den Druckgeber über die Druckversorgereinheit und/oder über Ventile, die die Druckversorgereinheit (Doppelhubkolben) mit dem Vorratsbehälter verbinden (d.h. PD3, PD1). Zur Regelung des Druckabbaus in beiden Bremskreisen wird der Druckgeber im Bremskreis BK II verwendet. Soll der Druck individuell in Bremskreis I und II abgebaut werden, wird zusätzlich die Druckschätzung auf Basis der Phasenstrommessung verwendet. Der Druckabbau kann dabei über eine Kammer 4 des Kolbens oder beide Kammern 4 und 4a erfolgen.

Der Druckabbau über Kolbenrückhub erfolgt dabei im normalen Bremskraftverstärkerbetrieb bis zu Drücken nahe des Blockierdrucks, der Druckabbau über PD3, PD1 bei Druckabbau aus hohen Drücken, insbesondere nach Fading bzw. Ende von ABS-Regelvorgängen.

Der Doppelhubkolben in der Druckversorgereinheit kann derart ausgestaltet sein, dass die hydraulischen Flächen im Vor- und Rückhub unterschiedlich sind. Durch Änderung der hydraulisch wirksamen Flächen wird der Drehmomentbedarf bei hohen Drücken reduziert. Gleichzeitig kann ein Vorfülleffekt erreicht werden, d.h. durch einen größeren Volumenstrom bei geringen Drücken kann ein sehr schnelles Anbremsen erreicht werden bzw. ein Belaglüftspiel überwunden werden.

Die geringe hydraulische wirksame Fläche wird dadurch wirksam, in dem der Doppelhubkolben im Rückhub betrieben wird bzw. ergänzend im Vorhub über ein Umschaltventil (ShV) oder zwei Ventile (TV2 und TV2b) die vordere und hintere Kammer des Doppelhubkolben verbunden werden und somit ein geringere hydraulische Fläche im Druckaufbau wirkt. Wird der Doppelhubkolben zurückgezogen, kann über Öffnen eines Druckabbauventils PD1 der Druck in beiden Bremskreisen in das Vorratsbehältnis abgebaut werden. Damit ist ein geräuscharmer Betrieb im geschlossen Bremskreis möglich. Durch intelligente Ansteuerung kann das Öffnen des Trennventils auch bei hohen Differenzdrücken (Bremskreisdruck zu Druck im Doppelhubkolben) dadurch unterstützt werden, indem der Doppelhubkolben vor dem Öffnen des Ventils den Druck im Arbeitsraum verändert und ein Öffnen bei geringen Differenzdrücken ermöglicht. Dies ermöglicht ein Downsizing des Trennventils, insbesondere dessen Auslegung auf hohe Durchflüsse und geringe Differenzdrücke.

Der Druckabbau erfolgt dann entweder über Kolbenrückhub (PD1 offen) über Druckvolumensteuerung und bedarfsweise Öffnen von Auslassventilen im Bremskreis II sowie Druckabbau über TV2b (ZAV). Zur Geräuschreduzierung kann für diesen Betriebspunkt ein Auslassventil zeitgesteuert gesteuert geöffnet und der Druckabbau über den Kolben beeinflusst werden, so dass Druckschwingungen vermieden werden und ein sanftes Einschwingen auf ein Zieldruckniveau erreicht wird. Dies kann insbesondere beim Druckabbau über ZAV wirksam eingesetzt werden.

Im Rückhub kann bei geschlossenen Ventil PD1 nur Druck aufgebaut werden bzw. das Volumen von einem Bremskreis in den anderen geschoben werden. Dieser Druckaufbau wird vorzugsweise nur dann genutzt, wenn der Druck über das normale Betriebsniveau signifikant angehoben werden muss, wie z. B. bei Fading ) 120 bar.

Zudem kann in einem Bremskreis in einer oder zwei Radbremszylindern Druck abgebaut und in dem anderen Bremskreis zeitglich Druck mit der Druckvolumensteuerungsmethode aufgebaut werden, wie dies in Fig. 5b dargestellt ist. Die Regelung des Druckes folgt dabei über die entsprechende angepasste Druckvolumenkennlinie, die Volumen der bestätigen Radbremsen sowie hydraulisch wirksame Fläche berücksichtigt. Wird der Zieldruck erreicht, wird das jeweils zugehörige Ventil geschlossen und das Volumen der noch aktiven Radbremsen wird über PD1 abgebaut. Gleichzeitig ist über ein Auslassventil ein Druckabbau möglich.

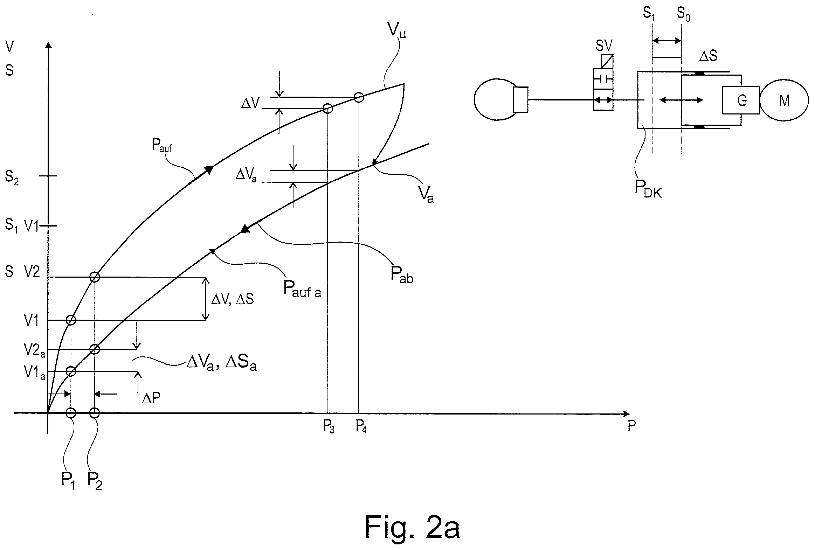

Im System wird vorzugsweise die MUX- Regelung, d.h. der Drucksteuerung über Druckvolumenkennlinie bei geschlossenen Bremskreis eingesetzt (Figur 2a-2b). Somit wird im geschlossenen Bremskreis der Druck auf Basis der Druckvolumenkennlinie auf- und abgebaut. Dies erfolgt vornehmlich bei der Bremskraftverstärkung, Rekuperation, ABS-Betrieb bei niedrigen Frequenzen und Druckamplituden. In anderen Betriebsfällen, wie z. B. kontrollierter Druckabbau nach ABS-Betrieb, gleichzeitiger Druckaufbau und Druckabbau bei hohen Frequenzen, kann der Druck ergänzend zur Zeitsteuerung der Auslassventile bedarfsweise unterstützt durch Plungerwegsteuerung im Druckabbau beeinflusst werden (Fig. 6b).

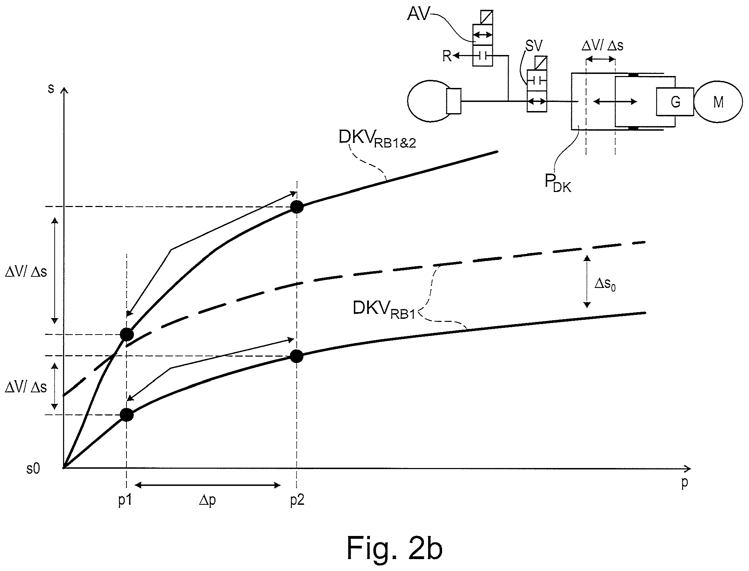

Nach dem Druckabbau bei Öffnung des Bremskreises kommt es stets zu einem Volumenverlust im Bremskreis und damit zu einer Wegänderung in der Kolbenposition der Druckerzeugereinheit. Daher ist es sinnvoll, die Offsetverschiebung s0 der Druckvolumenkennlinie zu erfassen (Figur 2b). Dies ist für die MUX-Regelung nicht erforderlich, jedoch für die Regelung und Optimierung des Volumenhaushaltes, um zu verhindern, dass der Kolben bei einem Regelungsvorgang an einen Anschlag fährt. Insbesondere bei Einsatz eines Doppelhubkolbens mit begrenztem Volumen in eine Hubrichtung, ist die Information der Absolutposition des Kolbens für die Regelung wichtig.

Diese vorgeschlagene Steuerung mit Auslassventil(en) und Druckabbau pab - Zeitsteuerung entlastet die Dynamik des Motors erheblich. Der seltene Einsatz des Auslassventils erhält die Vorteile, dass die ABS-Druckmodulation keine Öffnung des Bremskreises erforderlich macht, was die Wahrscheinlichkeit eines Bremskreisausfalls gering macht und besondere Vorteile für autonomes Fahren / Bremsen bringt.

Das Druckregelmodul mit Druckregelung und seinen verschiedenen Ausführungsformen bietet somit einen Baukasten für eine perfekte Druckregelung ohne Einschränkung und hoher Fehlersicherheit. Die Nachteile des klassischen Multiplexers, wie z. B. lange Zykluszeit durch sequentielle Radbedienung, keine Möglichkeit des gleichzeitigen Druckaufbaus und Druckabbaus, hohe Anforderung an Dynamik des Elektromotors, sind damit beseitigt und bieten die Grundlage für eine annähernd perfekte Regelung mit minimalen Ventilaufwand. Je nach Auswahl der Druckversorgereinheit (Einfachhubkolben oder Doppelhubkolben) sind unterschiedliche Freiheitsgrade möglich. Der Einfachhubkolben hat den Vorteil der geringen Software-Komplexität, der Doppelhubkolben bietet alle Freiheitsgrade und das Motordownsizingpotenzial. Zudem sind unabhängig von der Wahl der Druckversorgereinheit die Anforderungen an den Motordrehmomentbedarf für den Reversierbetrieb der Multiplexrege- lung drastisch reduziert und der Elektromotor kann signifikant in Baugröße und Kosten reduziert werden.

Eine weitere Verbesserung im System-Layout ergibt sich vorteilhaft durch Einspeisung des Volumens der Druckversorgereinheit über ein Schnüffelloch in die Vorderseite eines Schwimmkolbens. Hierdurch erhöht sich zudem vorteilhaft die Sicherheit bei gleichzeitig verringerten Kosten. Bei diesem System-layout kann auf das Trennventil TV1 verzichtet werden, da die Druckversorgereinheit im Systemausfall über Bewegung des Kolbens getrennt ist. Dies bietet Kostenvorteile (weniger Ventile) und reduziert den Strömungswiderstand zwischen Druckversorgereinheit und dem ersten Bremskreis (BK1).

### Figurenbeschreibung

Es zeigen :
- igur 1a:: eine erste mögliche Ausführungsform der erfindungsgemäßen Bremsanlage mit Hauptbremszylinder, Druckversorgung mit Auslassventil(en) in einem oder zwei Bremskreisen;
- Figur 1b:: Beispiel für eine vereinfachte Druckvolumenkennlinie;
- Figur 1c:: Druckregelmöglichkeiten im Grundsystem Figur 1a;
- Figur 1d:: Ventilschaltung mit AV/EV in Regelsystemen Stand der Technik;
- Figur 1e:: vorteilhafte Ventilschaltung für neue Regelung mit Schaltventilen und einem Auslassventil in einem Bremskreis;
- Figur 1f:: erfindungsgemäßes Einlassventil im Bremskreis;
- Figur 2a:: Druckvolumensteuerung im geschlossenen Bremskreis (AV, ZAV geschlossen);
- Figur 2b:: Druckvolumenkennlinie für Radbremse 1 und Radbremse 2 und Offsetschiebung durch Öffnen Bremskreis;
- Figur 3:: klassische Multiplexregelung in sequentieller Abfolge;
- Figur 3a:: Zyklusverkürzung Multiplexregelung mit AV-Ventil im Druckabbau;
- Figur 3b:: Zeitsteuerung bei Druckabbau über Auslassventil;
- Figur 4:: zeitlicher Verlauf einer bespielhaften Regelung mit 4 Radbremsen;
- Figur 4a:: zeitlicher Verlauf einer bespielhaften Regelung mit 4 Radbremsen;
- Figur 4b:: zeitlicher Verlauf einer bespielhaften Regelung mit 4 Radbremsen;
- Figur 5:: vorteilhafter Bremssystemaufbau mit Doppelhubkolben (DHK);
- Figur 5a:: Druckbauregelung im erfindungsgemäßen Multiplexbetrieb mit DHK und Auslassventil;
- Figur 5b:: simultane Druckabbau und Druckaufbauregelung im Multiplexbetrieb im DHK-Rückhub und Auslassventil;
- Figur 5c:: simultane Druckabbau und Druckaufbauregelung im Multiplexbetrieb im DHK-Vorhub und Auslassventil;
- Figur 5d:: geregelter oder gesteuerter Druckabbau in beiden Bremskreisen im geschlossen Kreis über Druckerzeugereinheit und PD3-Ventil;
- Figur 6:: Doppelhubkolbensystem in vorteilhafter zweikreisiger Ausführung.

### Figurenbeschreibung

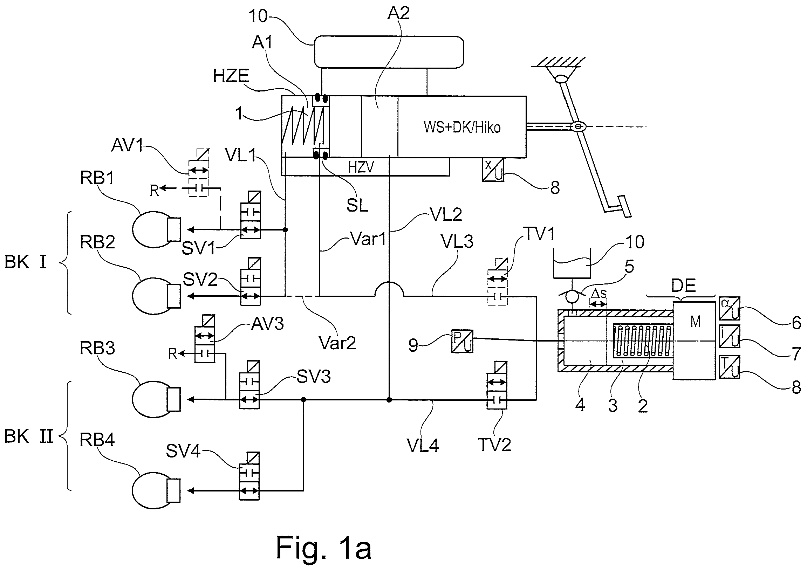

Die Figur 1a beschreibt die Basisausführungsform der erfindungsgemäßen Bremsanlage mit Hauptbremszylinder HZE, Druckversorgereinheit DE mit Einfachhubkolben (3) sowie Auslassventil(en) AV1, AV3 in einem oder optional 2 Bremskreisen. Der Bremskreis II ist vorteilhaft der Vorderachse zugeordnet. Das Auslassventil AV1 ist optional, d.h. es muss nicht unbedingt vorgesehen werden.

Die Bremsanlage besteht aus einem Hauptbremszylinder gemäß Stand der Technik bestehend aus einer Hauptbremszylindereinheit HZE, Schwimmkolben SK mit Rückstellfeder 1, einem Druckkolben DK oder Stößel oder einem Hilfskolben HiKo, einem hydraulisch bestätigen Wegsimulator WS und mit entsprechenden Steuerventilen HZV für die Funktionen der Kolbenzylindereinheit wie diese beispielweise im Stand der Technik beschrieben sind.

Folgende Ausführungsformen sind u.a. möglich:
a) Hauptbremszylinder mit zwei Kolben in Form eines Druckkolbens DK und eines Schwimmkolbens SK mit angeschlossenen Wegsimulator, der über ein Ventil absperrbar ist;
b) 3-Kolben-System mit Hilfskolben HS für Wegsimulatorbetätigung und Einspeiseventil und/oder mechanischer Durchgriff im Fehlerfall
c) 2-Kolben-System mit Schwimmkolben SK und Hilfskolben HiKo mit Einspeisung.

In allen Ausführungsformen ist die Hauptbremszylindereinheit HZE von der Druckversorgereinheit DE trennbar. Dies kann gemäß der Variante Var2 über die Trennventile TV1 und TV2 oder bei der zweiten dargestellten Variante Var1 über eine Sperrung der Versorgung des Schwimmkolbens erfolgen. Die Ventilbeschaltung des HZE sorgt dafür, dass es keine ungewünschte Rückwirkung auf das Pedal BP bei aktiver Druckversorgereinheit DE gibt und in der Rückfallebene (Systemausfall) das Volumen der Hauptbremszylindereinheit HZE in die Radbremsen RB1-4 geführt wird. Zudem ist jeder Radbremse ein Schaltventil SV1-4 in der hydraulischen Verbindung zu dem jeweils zugehörigen Arbeitsraum A1 bzw. A2 des Hauptbremszylinders HZE angeordnet. Für die erfindungsgemäße Bremsanlage ist die konkrete Ausgestaltung des Hauptbremszylinders HZE jedoch nicht von Relevanz.

Das Bremssystem hat vier Schaltventile SV1, SV2, SV3 und SV4, über die die Druckversorgung DE und der Hauptbremszylinder HZE mit den Radbremsen RB1-4 verbunden sind. Die Schaltventile SV1-4 haben vorzugsweise einen geringen Strömungswiderstand und eignen sich für den MUX-Betrieb. Zusätzlich ist ein Auslassventil AV3 in einem Bremskreis für den von MUX unabhängigen Druckabbau in der Radbremse RB3 vorgesehen, welches in der hydraulischen Verbindung zwischen Radbremse RB3 und dem Vorratsbehältnis 10 angeordnet ist. Vorzugsweise ist das Auslassventil AV3 an der Vorderradbremse RB3 eines Bremskreises positioniert, da der Druck in diesen Radbremsen in Extremfällen schnell und ohne großen Zeitverzug abgebaut werden muss, denn die signifikante Bremswirkung geht von der Vorderachse aus. Die Druckversorgereinheit DE besteht aus einem Elektromotor M, der über eine Spindel 2 einen Kolben 3 antreibt, der das Volumen in der Druckkammer 4 verdichtet oder verschiebt. Der Motor M der Druckversorgereinheit kann zwei oder drei Sensoren aufweisen:
a) Winkelgeber 6,
b) Strommesssensor zur Messung der Phasenströme des Elektromotors 7 sowie
c) bedarfsweise einen Temperatursensor 8 zur Ermittlung der Spulentemperatur des Elektromotors M.

Die Druckerzeugereinheit DE ist vorzugsweise im Ventilblock oder HZE angeordnet. Die Druckkammer 4 der Druckerzeugereinheit DE ist mit einem Rückschlagventil 5 mit dem Vorratsbehälter 10 in Verbindung. Am Ausgang der Druckerzeugereinheit DE ist ein Drucksensor 9 angeordnet. Der Bremskreis II ist über das Trennventil TV2 und Bremskreis I über das Trennventil TV1 mit der Druckversorgereinheit DE verbunden. Das Trennventil TV1 kann entfallen, in dem eine Trennung einer Kammer mit der Druckversorgereinheit DE in der Rückfallebene erfolgt. Dies kann durch Druckeinspeisung von der Druckerzeugereinheit DE über das Schnüffelloch SL des Schwimmkolbens SK erfolgen.

Zur Druckmodulation bei ABS und Rekuperation wird von der Steuerungseinrichtung und derem Regler die notwendige Druckänderung für Druckaufbau (im Folgenden als Pauf bezeichnet) und Druckabbau (im Folgenden als pab bezeichnet) bestimmt. Die Druckregelung übernimmt die Druckerzeugereinheit DE, in dem simultan oder zeitlich versetzt die einzelnen Räder / Radzylinder mit Druck versorgt werden. Hierzu wird vom E-Motor M über z. B. den Kolben 3 das entsprechende Volumen zur Druckänderung in beiden Richtungen verschoben.

Hierbei könnte die Druckänderung entsprechend des Standes der Technik durch entsprechende Zeitsteuerung mit PMW der Schaltventile und Drucksteuerung des Druckes der DE verändert werden. Dies erfordert jedoch ein sehr genaues PWM-Verfahren mit komplexem Druckmodell. Bevorzugt wird deshalb die Volumensteuerung eingesetzt, wie Sie oben bereits beschrieben wurde. Hierzu werden die Daten der Druck-Volumen-Kennlinie (p-V-Kennlinie - siehe Figur 1a und 2a) der jeweils am Druckaufbau oder Druckabbau beteiligten Radbremse RB1-4 im Speicher des Reglers abgelegt. Erfolgt nun vom Regler die Anforderung für eine Druckänderung Δρ, so wird zur Druckregelung am Rad das Differenzvolumen Δv entsprechend vom Kolben in beiden Richtungen ± S verstellt. Hierzu erfolgt die Öffnung eines oder mehrerer Schaltventile, welche nach Beendigung der Volumenverschiebung wieder geschlossen werden. Die Stellung des Kolbens 3, z. B. Hubanfang oder Hubmitte, Ende, ist für die ΔP- Volumensteuerung für die Regelung ohne Bedeutung. Hierbei kann während der Druckänderung eine zeitliche Steuerung eingesetzt werden, um Übergangsfunktionen gegen Ende der Druckänderung umzusetzen, z. B. zur Reduzierung der Druckschwingungen und den damit verbundenen Geräuschen.

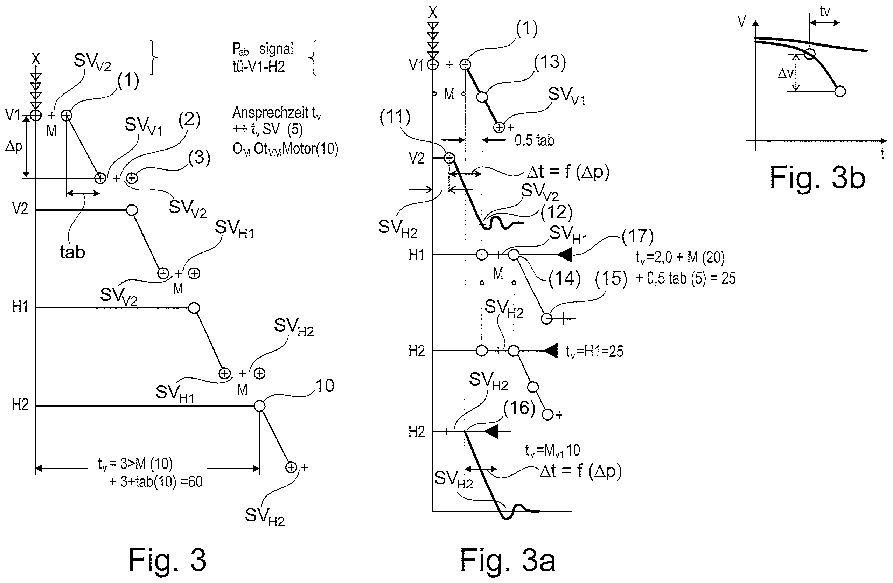

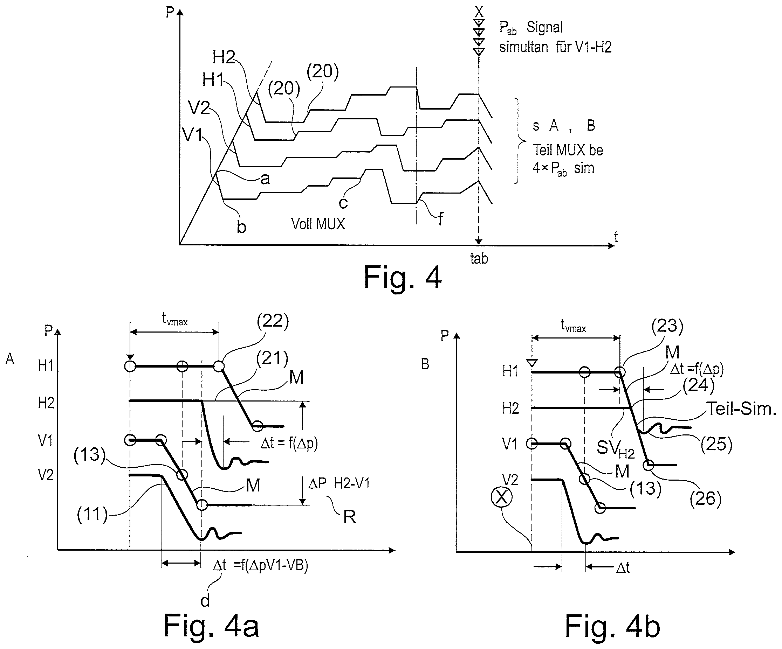

Wichtig ist eine hohe Dynamik, wenn zwei oder mehr Räder gleichzeitig eine Druckänderung benötigen. Die Erfindung schlägt hierfür vor, dass zur Entlastung der Motordynamik ein oder zwei zusätzliche Auslassventile AV eingesetzt werden. Bei der Volumensteuerung ist insbesondere auch das Druckniveau in der Druckerzeugereinheit DE und in den Rädern von Bedeutung. Günstig ist hierbei, dass das Druckniveau bei Druckänderung dem Ausgangsdruck des zu regelnden Rads entspricht. Damit wird eine schnelle und geräuscharme Druckregelung erzielt. Die Zeitabläufe werden in Figuren 3, 3a, 3b und Figuren 4, 4a, 4b dargestellt.

Als Druckerzeugereinheit DE sind alle Pumpen mit Einfachkolben, Stufenkolben, Doppelhubkolben auch z. B. Zahnradpumpen denkbar, die eine genaue Volumensteuerung ermöglichen.

In der Figur 1a erfolgt bei den o. g. Funktionen die Druckerzeugung einkreisig direkt über ein Trennventil TV1 in BK1 (Var2) oder alternativ über ein Schnüffelloch SL auf die Vorderseite des SK-Kolbens (Var1). Die Druckversorgung in den Bremskreis BK2 erfolgt über ein Trennventil TV2. Bei einer Einspeisung über das Schnüffelloch SL auf die Vorderseite des Schwimmkolbens SK kann optional das Trennventil TV1 eingespart werden, da bei Systemausfall die Druckerzeugereinheit DE vom Hauptbremszylinderwirkung getrennt wird, in dem der Kolben SK sich bewegt und die Druckversorgung DE abtrennt. Alternativ hierzu kann wie gestrichelt gezeichnet, die Druckerzeugereinheit DE über das TV1 direkt mit BK1 verbunden werden (Var 2). Da der SK-Kolben in der Var. 1 nur in der Rückfallebene bewegt wird, ist eine spezielle Diagnoseschaltung notwendig, bei der der Schwimmkolben SK bewegt wird und auf Dichtigkeit geprüft wird.

Die Figur 1b beschreibt die bekannte Drucksteuerung auf Basis einer vereinfachten Druckvolumenkennlinie, die der MUX-Regelung zugrunde liegt. Entsprechend der geforderten Druckdifferenz Δρ wird aus einer Kennlinie eine Volumenänderung ΔV abgelesen, die durch Verstellung des Plungers der Druckerzeugereinheit DE in eine Wegänderung As des Kolbens 3 umgesetzt wird. Dies gilt sowohl für Druckaufbau als auch Druckabbau.

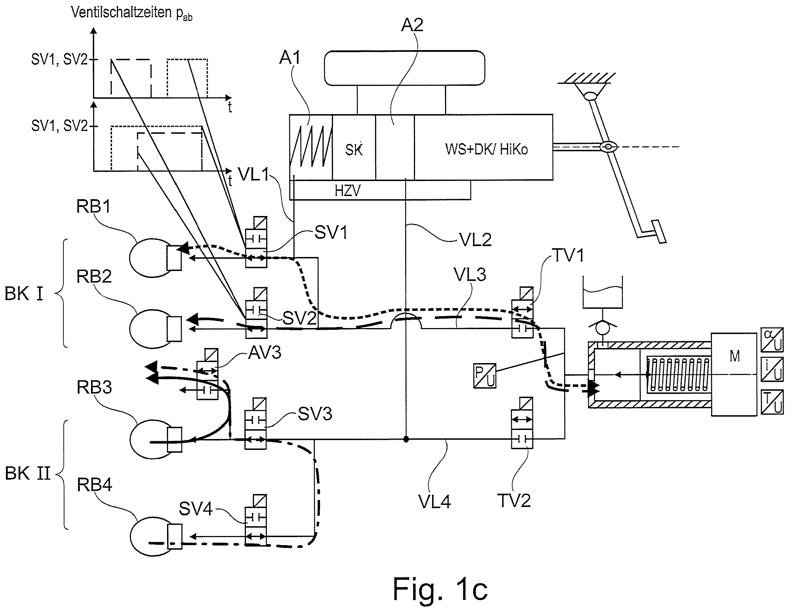

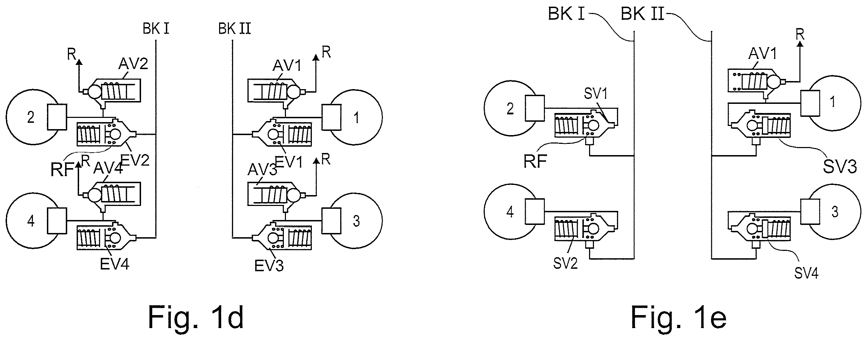

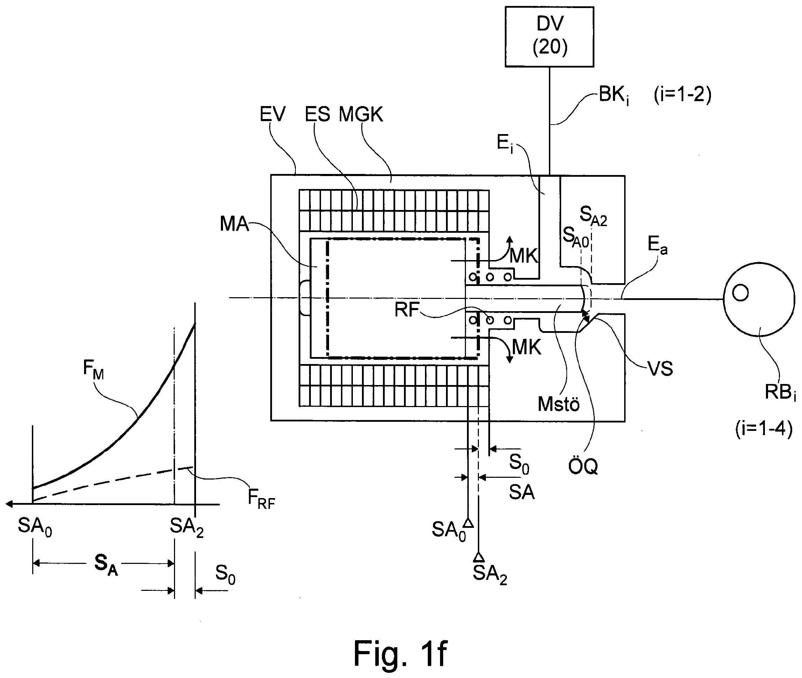

Die Figur 1c zeigt eine grundsätzliche Möglichkeit der Druckregelung in der Basisausführungsform der Figur 1. Das System selbst hat folgende Freiheitsgrade der Druckregelung:
- Druckaufbau und Druckabbau in allen Bremskreisen BKI und BKII vorwiegend mit der Multiplexregelung (Druckregelung mit Druckvolumensteuerung) in allen Radbremszylindern, simultan oder sequentiell;
- Multiplexregelung im Druckaufbau und Druckabbau in Bremskreis I über das geöffnete Trennventil TV1 sowie gleichzeitiger Druckabbau im Bremskreis II über das Auslassventil AV3;
- Multiplexregelung über SV1, SV1, SV2, SV4 im Druckaufbau und Druckabbau im Bremskreis I und II für die Radbremsen Radbremse RB1, RB2 und RB4 sowie simultaner Druckabbau in der Radbremse RB3 über geöffnetes Auslassventil AV3 bei geschlossenen Schaltventil SV3.

Der Druckabbau pab über die Schaltventile SV1 und SV2 im BK I erfolgt vorwiegend über die Druckvolumensteuerung sequentiell oder simultan. Dazu ist das jeweilige Schaltventile SVi immer geöffnet. Bei simultanen Druckabbau pab bei unterschiedlichen Ausgangsdrücken kann optional von der MUX-Regelung abgewichen werden, in dem die Schaltventile SV1 und SV2 zeitversetzt geöffnet werden, und der Druckabbau pab über ein Schaltventil SV2 gesteuert. Das Trennventil TV1 ist beim Druckabbau durchgehend geöffnet. Die Radbremse RB1 hat in diesem Ausführungsbeispiel einen höheren Druck, daher wird das zugehörige Schaltventil SV1 vor dem Schaltventil SV2 geöffnet. Auf Basis des Wissens der Druckdifferenz -der Raddruck in den Radbremsen RB1 und RB2 sowie der Druck in der Druckerzeugereinheit DE sind bekannt - kann die Zeit- Steuerung genau bemessen werden. Das Schaltventil SV2 wird dann genöffnet, wenn der Druck der Druckerzeugereinheit DE annähernd erreicht ist. Der weitere Druckabbau erfolgt dann simultan in beiden Radbremszylinder RB1 und RB2 durch Steuerung über den Kolben 3 bei geöffneten Schaltventilen SV1, SV2 und TV1. Wird der Zieldruck eines Rades erreicht, wird das entsprechende Schaltventil SV1 bzw. SV2 geschlossen. Ist ein weiterer Druckabbau in einem Rad gewünscht, kann der weitere Druckabbau dann in der jeweiligen Radbremse erfolgen.

Wie bereits beschrieben, wird zur Systemvereinfachung vorzugsweise auf die PWM-Steuerung, insbesondere auch zur Geräuschreduzierung, verzichtet.

Beispielhafte zeitliche Verläufe des Druckabbaus sind in Figur 4a bis 4c beschrieben.

Die Figur 1d zeigt eine konventionelle Ventilschaltung für ABS mit vier Einlassventilen EV und vier Auslassventilen AV. Sollte diese auch mit weniger AV für MUX eingesetzt werden mit z.B. Differenzdruck bei MUX, so muss neben diesem Druck der Fehlerfall berücksichtigt werden, dass bei asymmetrischer Fahrbahn plötzlich die Druckerzeugereinheit und zudem die Ventilansteuerung ausfällt, z.B. durch ECU, und sich die Druckerzeugereinheit zugleich auf niedrigem Druckniveau befindet. In diesem Fall hätte z. B. EVI: 130 bar und EV2: 0 bar. Bei Ausfall der Druckerzeugereinheit bedeutet dies, dass bei EVI die Rückstellfeder des Ventilankers gegen 130 bar öffnen muss. Um dies möglich zu machen, muss der Magnetkreis des Ventils entsprechend groß sein, wodurch das Ventil teuer wird. Als Alternative kann ein druckentlastetes Ventil eingesetzt werden, dessen Kosten jedoch ebenfalls hoch sind.

Bei der Dimensionierung des Ventilsitzes ist zudem zu berücksichtigen, dass er möglichst groß sein soll, um einen kleinen Staudruck zu erzeugen, wenn der Bremsdruck von der Druckerzeugereinheit schnell aufgebaut werden soll. Der Staudruck geht direkt in das Motordrehmoment, Leistung ein.

Die Figur 1e zeigt eine geänderte Durchströmung der Schaltventile SV. Das Hydraulikmedium strömt vom Bremskreis bzw. der Druckerzeugereinheit über den Ankerraum zum Ventilsitz hin zum Radzylinder. Tritt der o. g. Fehlerfall ein, so öffnet der Raddruck das Schaltventil. Die Magnetkraft muss jedoch auch gegen 130 bar schließen, was aber bei kleinem Ankerluftspalt in der Ventilendstellung erfolgt. Die Rückstellfeder der Schaltventile SV muss deshalb nur geringfügig verstärkt werden, damit das Schaltventil nicht bei entsprechend hohem Volumenstrom "zureißt". Da konventionelle Einlassventile gegen bis zu 220 bar schließen müssen - bei Fig. 1e 130 bar -, kann bei gleicher Magnetdimensionierung die Ventilsitzfläche erhöht werden, was einen kleineren Staudruck bzw. Strömungswiderstand bedeutet und vorteilhaft für den MUX-Betrieb ist. Die in Figur 1e dargestellte Ventilschaltung ist daher vorteilhaft für die erfindungsgemäße Bremsanlage.

Die Figur 1f zeigt eine mögliche Ausgestaltung des erfindungsgemäßen Einlassventils EV und den Anschluss an den Bremskreis BK sowie die Druckversorgung DV und die Randbremsen RBi.

Das Einlassventil EV weist einen Magnetanker MA, einen magnetischen Grundkörper MGK sowie eine Erregerspule ES auf. Wird das Magnetventil EV bestromt, verschiebt die Magnetkraft MK den Anker MA aus der Position SA o in die Position SA2 um den Differenzweg SA. Der Magnetanker MA bewegt einen Stößel MStö um den gleichen Weg, so dass der Stößel MStö am Ventilsitz VS zur Anlage gelangt und den Auslass Ea des Magnetventils schließt. Der Anker MA hat an dieser Stelle noch einen Restluftspalt S0 zum magnetischen Grundkörper MKG, der dafür vorgesehen ist, dass der Anker MA bei Abschalten der Bestromung der Erregerspule ES des Ventils EV durch Ummagnetisierungsverluste des Eisenkreises nicht am Magnetgehäuse MGK haftet. Die Rückstellfeder RF bewegt bei Abschalten des Ventilstroms den Anker MA zurück in die Ausgangsstellung. Die Magnetkraft FM steigt dabei bei kleinerem Luftspalt, d.h. zunehmenden Weg nichtlinear an. Die Rückstellfeder FRF ist derart bemessen, dass die Magnetkraft FM in der Ausgangsstellung SA o größer ist als die Federkraft, damit ein sicheres Schließen des Ventils gewährleistet ist. Die Federkraft steigt mit zunehmenden Weg SA an und ist in der Endstellung SA2 ebenfalls geringer als die Magnetkraft FM. Vorzugsweise wird eine linear Feder eingesetzt, damit die Magnetkraft FM in der Endstellung bei gegebenen Strom deutlich höhere ist als die Rückstellkraft, so dass das Ventil mit geringem Strom gehalten werden kann bzw. ein sicheres Schließen auch bei hohen Differenz- drücken zwischen Radbremse und Druckversorgung sichergestellt ist. Das Halten ist auch bei hohen Differenzdrücken sichergestellt, da die Magnetkraft bei geschlossener Ventilposition stark nichtlinear zunimmt. Die Rückstellfeder ist aber auch derart zu dimensionieren, dass die Funktion als stromlos offenes Ventil sichergestellt werden kann und das Ventil immer sicher öffnet.

Der Ausgang Ea des Ventils in an die Radbremsen RBi (RB1-RB4) angeschlossen, der Eingang E, an einen Bremskreis BKi bzw. an die Druckversorgereinheit DV (20). Durch einen derartigen Anschluss kann das Einlassventil EV sowohl durch die Rückstellfeder RF als auch durch den Druck in der Radbremse geöffnet werden, was insbesondere im Fehlerfall bzw. Störfall der Bremsanlage (z. B. Ausfall der Spannung am Ventil) sehr wichtig ist. Zudem wirkt auch bei hohen Drücken im Bremskreis und kleinen Drücken in der Radbremse nur die Druckdifferenz zwischen Einlass Ei und Auslass Ea auf den Stößel MStö. Diese Differenzdruck am Ventil ist im Druckaufbau relativ gering, muss jedoch bei der Federauslegung RF berücksichtigt werden, damit die Druckdifferenz nicht dazu führt, dass beim Druckaufbau das Ventil zugedrückt wird, wenn das Volumen von der Druckversorgung DV in die Radbremse gefördert wird. Ventile mit großem Öffnungsquerschnitt ÖQ bzw. geringen Strömungsverlusten reduzieren diesen Effekt

Insbesondere bei einem Druckaufbau mit Druckvolumensteuerung bzw. Zeitsteuerung mit niedrigem Differenzdruck zwischen Vordruck und Istdruck in der Radbremse können die zuvor beschriebenen Ventile mit großem Öffnungsquerschnitt eingesetzt werden, da die Regelgenauigkeit sehr hoch ist. Dies hat wiederum Vorteile, dass nur geringe Strömungsverluste, insbesondere beim schnellen Druckaufbau (TTL), auftreten und der Antriebsmotor nur eine geringe Leistung für den schnellen Druckaufbau in kürzester Zeit (TTL= 150ms) erfordert.

Zudem kann aufgrund der geringen Strömungsverluste der vorteilhaft gestalten Einlassventile ein Druckabbau über die Einlassventile schnell erfolgen. Ein genauer Druckabbau über die Einlassventile EV kann durch entsprechende Steuerung der Kolbenbewegung der Druckversorgereinheit 20 vorgenommen werden. Optional ist es auch möglich das bekannte MUX-Verfahren mit der vorbeschriebenen Ventilschaltung umzusetzen oder mit der Druckabbausteuerung über Auslassventile AV in einem Bremskreis, insbesondere für Verbraucher mit geringem Volumenhaushalt, wie z. B. den Radbremsen der Hinterachse. D. h. es ist auch eine Kombination möglich, dass das MUX-Verfahren in Zusammenhang mit der neuen Ventilbeschaltung nur in zwei Radbremsen (z. B. Vordachse) eingesetzt wird und an zwei weiteren Radbremsen der Druckabbau konventionell erfolgt. Dies würde bedeuten, dass zwei Radbremsen/Aktoren mit Einlass- und Auslassventilen (EV+AV) vorgesehen sind und zwei Radbremsen/Aktoren nur mit Einlass- bzw. Schaltventilen EV. In diesem Fall könnten nur die Radbremsen der Vorderachse mit der erfindungsgemäßen neuen Ventilschaltung gemäß Figuren 1a und 1b bestückt werden, an der Hinterachse eine Standardbeschaltung/Standardventile eingesetzt werden.

Die Figur 2a zeigt die Druck-Volumen-Kennlinie eines Rades / Radzylinders mit Anschlussleitungen bis zum Schaltventil SV und Druckgeber. Es sind zwei Kennlinien dargestellt. Kennlinie Paufa entspricht einer so genannten steifen Kennlinie, die andere Kennlinie Pauf benötigt erheblich mehr Volumen. Das verursacht z. B. durch Lüftspiel oder schlechte Entlüftung im Extremfall Dampfblasen.

Dies bedeutet, dass die Werte für Va z. B. für ΔP = Pi - P2 gleich y1 - V2 = AVa = ASa entsprechen und bei Vauf = ΔP gleich VIa - V2a = AV = AS. Diese Kennlinie für pauf und pab wird z. B. erstmalig bei der Bandendkontrolle i den Speicher der Steuerungseinrichtung aufgenommen sowohl von den einzelnen Radbremsen als auch bei den Bremskreisen sowohl pauf als auch pab. Bei jeder Bremsung wird die Kennlinie durch Vergleich des Druckes P mit dem Volumen V(AS) gemessen. Stellt sich eine größere Abweichung ein, so können bei Fahrzeugstillstand die Kennlinien, wie bei o. a. Kontrolle, aufgenommen oder adaptiert werden. Bedeutsam ist ferner, dass die Werte zwischen Pauf und Pab schwanken können. Normal ist, dass V0 durch Luftspiel beim Druckaufbau Pauf größer ist, nicht jedoch beim Druckabbau Pab. Nachdem das Lüftspiel eliminiert ist, sind die Kennlinien nahezu gleich.

Bei schlechter Entlüftung oder Dampfblasen verhalten sich die Kennlinien ähnlich jedoch mit größerem Volumen für den entsprechenden Druckwert. Für die Regelung werden die p-V-Kennlinien für den Druckaufbau pauf und den Druckabbau pab verwendet.

Die Figur. 2b beschreibt die für die Druckregelung ohne Hysterese vereinfachten relevanten Druck-Volumen-Kennlinien im geschlossen Bremskreis bzw. Verschiebung nach Druckabbau mit geöffnetem Auslassventil AV. Ausgehend von einem Druck pl wird über Sollvergabe des Differenzdruckes Δρ die erforderliche Volumenverschiebung Δv bzw. Wegänderung As des Kolbens aus der Kennlinie abgelesen. Diese unterscheiden sich und sind davon abhängig, ob in einem oder mehreren Bremskreisen der Druck verändert wird. Der Kolben wird dann entsprechend verschoben. Wird der Druck über ein oder mehrere Auslassventile abgebaut, kommt es zu einem Volumenverlust in der Druckerzeugereinheit. Für einen weiteren Druckabbau oder Druckaufbau im geschlossenen Bremskreis wird die Wegzuordnung der Druckvolumenkennlinie durch Erfassen des Druckes bestimmt. Dies wird in der Regelung für die Kontrolle des Volumenhaushaltes benötigt, da der Arbeitsraum der Druckerzeugereinheit nur ein begrenztes Volumen hat und somit gegen Ende der Hubbewegung des Kolbens, dieser bei einem Volumenänderungsbefehl an den Anschlag fahren würde. Kommt der Kolben der Druckerzeugereinheit nach einer Druckänderung in die Nähe des Anschlages und steht ein weiterer Druckanstieg an, wird der Kolben bei geschlossenen Schaltventilen SV kurzzeitig zurückgefahren, um aus dem Vorratsbehälter Volumen anzusaugen. Bei der Ausführung mit Doppelhubkolben (Fig. 5-6) wird dieser zurückgefahren oder auf den Rückhubbetrieb umgeschaltet.

Die Figur 3 zeigt einen Zeitablauf der MUX-Regelung wie sie aus WO 2006/111393 A1 bzw. WO 2010/091883 A1 bekannt ist. Dieses System wird als sog. 4-Kanal-MUX bezeichnet, bei dem außer bei dem kritischen Fall des gleichzeitigen Druckabbaus (simultaner pab) der Druckabbau pab pro Radkanal (Zylinder) seriell abgearbeitet wird. Im Worst Case-Scenario verursacht dies eine große Verzugszeit, welcher als Folge der einzelnen Ansprechzeiten von Ventil, Motor und Zeit für den jeweiligen Druckabbau pab große Differenzgeschwindigkeiten oder auch Schlupf bedeutet. Dies vermindert sowohl die Stabilität der Bremsung und verlängert nachteilig den Bremsweg. Optimierungen wurden durchgeführt an Ansprechzeit von Schaltventilen, Motor und Druckabbaugradienten. Die Kosten limitieren jedoch die Optimierung. Der Fall eines gleichzeitigen Druckabbaus pab für alle Kanäle wurde in der Praxis jedoch selten festgestellt. Eine weitere Einschränkung besteht bei dem aus WO 2006/111393 A1 bzw. WO 2010/091883 A1 bekannten Regelungskonzept in der notwendigen Priorität für den Druckabbau pab. Sofern ein Druckabbau erforderlich ist, kann kein Druckaufbau pauf erfolgen. Da in der Regel die Zeit für den Druckaufbau pauf im Regelzyklus bei ca. 200ms liegt und pro Regelzyklus zwei bis drei kleine pauf erfolgen, mit jeweils ca. 10 ms Verzugszeit, wurde dies nicht kritisch bewertet, aber als kleines Defizit für den 4-Kanal-MUX registriert.

Die erfindungsgemäße Bremsanlage mit ihrem Regelungskonzept weist die folgenden Verbesserung auf:
- Einführung eines zusätzlichen Auslassventils an der Vorderachse;
- Verschiedene Steuerungsverfahren und Strategien zur Steuerung und Regelung der Radbremsen, z. B. VA, Kurvenbremsen
- Möglichkeit des Druckaufbaus pauf mit gleichzeitigem Druckabbau pab (in Figur 5b und Figur 5c beschrieben).

Die Figur 3 zeigt den Druckverlauf in den einzelnen Radbremsen über die Zeit bei einem herkömmlichen MUX-Betrieb, bei dem der Druck in den Radbremsen zeitlich nacheinander abgebaut wird. VI und V2 sind die Vorderradbremsen, H1 und H2 sind die Hinterachsbremsen. Bei X erfolgt das Signal zum gleichzeitigen Druckabbau pab. Die Ansprechzeit tv SV der Schaltventil SV beträgt ca. 5ms. Die Ansprechzeit tv M für den Motor beträgt ca. 10ms. Hierbei ist mitberücksichtigt, dass sich der Kolben der Druckerzeugereinheit zunächst für die verschiedenen Druckniveaus der einzelnen Räder vor der Druckänderung bei (1) erst positionieren muss. Anschließend erfolgt der Druckabbau pab mit der Annahme von tab von ca. 10 ms, wobei in dieser Zeit der Druck um Δρ gleich ca. 20 bar abgebaut wird.

Die in Figur 3 angenommenen Ansprechzeiten der Schaltventile und des Motors werden für einen objektiven Vergleich auch für die Darstellung des zeitlichen Druckverlaufs in Figur 3a angenommen, welcher dem erfindungsgemäßen Druckverlauf entspricht.

Bei herkömmlichen ABS-Systemen mit 4 Einlass- und 4 Auslassventilen wird vom ABS Regler stets ein Δρ bestimmt und dann die Zeit bestimmt, für die das Auslassventil zu öffnen ist, damit sich der geforderte Druckabbau in der Radbremse einstellt. Diese Zeitsteuerung ist bekanntlich Toleranz behaftet, was die Genauigkeit der Druckregelung eingeschränkt. Außerdem entstehen beim Schließen des Auslassventils AV stets immer Druckschwingungen, die nachteilig Geräusche verursachen.

Der ABS Regler bestimmt dabei die benötigte Druckdifferenz Δρ im Wesentlichen aus der Radwinkelbeschleunigung und teilweise dem Radschlupf mit Korrekturfaktoren
a) Radträgheitsmoment,
b) Getriebeschaltstufe und
c) Fading- Erkennung.

Im Gegensatz zur Zeitsteuerung wird beim herkömmlichen MUX, wie in Figur 1 und 1a gezeigt, eine Volumensteuerung der Druckversorgung eingesetzt, bei der Δv=Δρ entspricht, wobei dies unter Auswertung der Druck-Volumen- Kennlinie des Rades erfolgt. Damit ist die Genauigkeit der Druckregelung viel größer und der zeitliche Druckverlauf kann gegen Ende des Druckabbaus beeinflusst werden, so dass nur geringe Druckschwingungen entstehen.

Bei VI in Figur 3 wirkt nach (X) tv M die Ansprechzeit von tv M und tv von SV1. Nach Öffnung des Schaltventils SV1 ist der Motor M in der Lage, den Druck über die Zeit tab abzubauen. Anschließend wird das SV1 bei (2) wieder geschlossen.

Zuvor hat jedoch der Motor über die beschriebene Volumensteuerung der Druckversorgung das geforderte Druckniveau bereits erreicht.

Danach stellt sich der Motor bereits bei auf den Druckabbau pab von Vorderrad V2 ein, was dann nach Öffnung von SV2 von V2 auch erfolgt. Somit ergibt sich in der Reihenfolge V1-H2 eine gesamte Verzugszeit mit o.g. Annahmen von 60 ms. Dies entspricht ungefähr einer Regelabweichung Δv von ca. 15 km/h.

In Figur 3a ist der zeitliche Druckverlauf für das erfindungsgemäße Regelungskonzept dargestellt. Der Druckabbau pab bei der Vorderradbremse VI Zum Zeitpunkt (1) entspricht (1) in Figur 3. Bei der Vorderrad bremse V2 wird das zusätzliche Auslassventil AV zum Druckabbau pab eingesetzt. Der Druckabbau Pab erfolgt nahezu nicht verzögert bei (11) über eine oben beschriebene Zeitsteuerung t bei der bei (12) nach Schließen von SV2 die Druckschwingung entsteht. Damit ist die Regelung der Vorderräder VI und V2, welche bei high-µ einen erheblich größeren Beitrag zur Bremskraftwirkung als die Hinterräder erbringen, nahezu nicht verzögert. Während des Druckabbaus pab von VI wird der Motor bei (13) bereits auf die Druckänderung beim Hinterrad H1 vorbereitet. Diese erfolgt dann bei (14) bis (15) per Volumensteuerung mittels der Druckerzeugereinheit DE. Da die Hinterräder H I, H2 oft dasselbe höhere Druckniveau wie VI oder V2 haben, kann ein simultaner Druckabbau pab mittels Volumensteuerung erfolgen. Als Alternative hierzu kann bei H2 bei (16) auch ein zeitgesteuerter Druckabbau pab in den Bremskreis hinein erfolgen. Voraussetzung hierfür ist, dass das MUX Druckniveau in der Radbremse des Hinterrades H2 niedriger liegt als bei dem Hinterrad H1, bei dem mittels Volumensteuerung der Druckabbau erfolgt. Ebenso ist es möglich, dass der Druckabbau in der Hinterradbremse H2 über ein zeitgesteuertes Öffnen des zugehörigen Auslassventils erfolgt.

Varianten der Vorderachsen- und Hinterachsen-Regelung sind in den Figuren 4, 4a, 4b detailliert dargestellt und beschreiben. Ein Vergleich der Verzugszeiten tv zeigt im Vergleich zur herkömmlichen MUX-Methode in Figur 3 bei (10) mit 60ms und (17) mit 25 ms eine signifikante Verbesserung. Dies ist möglich durch Einsatz des zeitgesteuerten Druckabbaus pab bei V2 und H2 mittels Auslassventil bzw. in den Bremskreis hinein, teilsimultanen pab bei H1 und H2 und Prioritätssteuerung bei H1 und (13).

Die Figur 4 - 4b zeigen den Druckverlauf mit unterschiedlichen realen Druckniveaus und Varianten der Vorder- und Hinterräder H I, H2, VI und V2 bei dem erfindungsgemäßen Regelungskonzept.

Figur 4 zeigt den zeitlichen Druckverlauf VI bis H2 in verschiedenen Phasen. In der Phase 0-X ist ein Druckverlauf gezeigt, in der aufgrund von unterschiedlichen Druckniveaus in den Radbremsen kein simultaner Druckaufbau Pauf und Druckabbau pab erfolgen kann., was am häufigsten der Fall ist. Dementsprechend ist hier auch der Voll-Multiplexbetrieb wirksam, d.h. genaue Δρ- Regelung über Volumensteuerung sowohl für den Druckaufbau pauf als auch für den Druckabbau pab - Beim Druckaufbau pauf wird manchmal z.B. bei 20 bei gleichzeitiger Druckaufbauforderung ein zeitlich versetzter Druckaufbau pauf bei H1 und H2 erfolgen. Es kann jedoch auch ein teilsimultaner Druckaufbau Pauf erfolgen. Ebenso ist ein teilsimultaner Druckabbau, wie dies in Figur 4b gezeigt ist, möglich.

Bei X in Figur 4 erfolgt das Signal pab zum simultanen Druckabbau in allen Radbremsen, was ohne Zeitverzögerung umgesetzt wird. Diese zwei Varianten A und B werden in Figur 4a und Figur 4b genauer behandelt.

Die Figur 4a zeigt die Variante A wiederum beginnend mit dem Ausgangspunkt X mit Pab bei VI und V2 wie in Figur 3a beschrieben. Beim Vorderrad VI erfolgt der Druckabbau pab mittels Volumensteuerung über die Druckerzeugereinheit DE. Für das Hinterrad H2 erfolgt bei 21 ein gesteuert pab über die zeit dt=f(dp). Dieser Druckabbau erfolgt, wenn ausreichend Differenzdruck Δρ zwischen H2-V1 vorhanden ist. Die Druckniveaus aller Räder sind beim erfindungsgemäßen Regelungskonzept oder auch MUX-Verfahren bekannt, so dass auch ein relativer genaue Druckabbau pab im Hinterrad H2 über die Zeitsteuerung, spricht das Öffnen des Schaltventils SVH2, erreicht wird. Die notwenige Öffnungszeit t kann auch aufgrund der Änderung des Druckniveaus von M1 (MUX) flexibel angepasst werden. Der Druckabbau pab des Hinterrades H1 erfolgt ebenfalls per Volumensteuerung, ausgehend von der Vorbereitung bei 13 und dann durch Öffnen des zugehörigen Schaltventils bei 22.

Als Ergebnis ergibt sich ein relativ kleines tvmax wie in Figur 3a beschreiben. Bei 11 erfolgt der zeitgesteuerte Druckabbau pab für das Vorderrad V2. Auch hier ist die Druckdifferenz zum Vorratsbehälter bekannt und somit eine genaue Drucksteuerung durch das zeitgesteuerte Öffnen des Auslassventils möglich.

Figur 4b zeigt die Variante B zum teilsimultanen Druckabbau an den Hinterrädern H1 und H2 ausgehend von einer relativ geringen Druckdifferenz bei den Hinterrädern H1 zu H2. Hier erfolgt nach Vorbereitung bei 13 bei 23 der Druckabbau pab mit MUX, d.h. Volumensteuerung mittels der Druckerzeugereinheit. Bei 24 wird das Hinterrad H2 in den Druckabbau pab durch Öffnen des zum Hinterrad H2 gehörenden Schaltventils SVH2 zugeschaltet. Bei 25 ist der gesteuerte Druckabbau pab für H2 erreicht, weshalb das Schaltventil SVH2 geschlossen wird. Bei 26 ist dann über die Volumensteuerung das Δρ für das Hinterrad H1 erreicht, weshalb bei 26 das Schaltventil SVH I geschlossen wird.

Beide Verfahren ermöglichen eine kurze Verzugszeit. Teilweise erzeugt der gesteuerte Druckabbau pa die Druckschwingungen, welche aber nur im Extremfall bei gleichzeitigem Druckabbau pa auftreten.

Zusammenfassend und ergänzend ist folgendes kennzeichnend :
- der Druck eines jeden Rades wird zu Beginn und Ende eines Druckabbaus Pab (Figur 4, 4a) im Speicher abgelegt; beide Werte werden als Referenz für die folgenden Druckänderungen des Rades oder der nachfolgenden Räder verwendet;
- der Druck des letzten Druckaufbaus pauf (Figur 4) wird im Speicher abgelegt wird und bildet somit die Basis für die Einstellung des Druckes der Druckerzeugereinheit DE als Vorbereitung des nachfolgenden Druckabbaus pa;
- die Auslassventile AV sind zeitgesteuert, wobei hierfür die Druckdifferenz zum Vorratsbehälter berücksichtigt wird; ein Rad der Vorderachse ist lediglich über Schaltventil SV mit dem Bremskreis verbunden, wobei dem zweiten Rad der Vorderachse ein Schaltventil SV hin zum Bremskreis und ein Auslassventil AV hin zum Vorratsbehältnis zugeordnet ist, so dass Schaltventile SV von Hinterachse zum pab zeitgesteuert werden, während MUX die Räder der Vorderachse mit niedrigem Druckniveau steuert, bei der die Zeitsteuerung tab der Schaltventile SV der Hinterachse HA den Differenzdruck Δρ auswertet;
- Neben dem Differenzdruck wird für die Zeitsteuerung (Ventile werden für eine vorbestimmte Zeit geöffnet) das Δρ des entsprechenden Auslassventils AV aus der Druck-Volumen-Kennlinie ausgewertet. Prioritätssteuerung des MUX mit Orientierung auf Fahrstabilität bei Bremsweg, z. B. Rad der Vorderachse VA hat Priorität und weitere bei positiven µ- Sprung mit höchster negativer pab oder positiver Beschleunigung pauf, da hier das zu regelnde Δρ am größten ist; Die Druckänderung per Volumensteuerung mittels der Druckerzeugungseinheit und der parallel verwendeten zeitgesteuerten Öffnung eines Auslassventils oder Schaltventils bildet den kombinierten MUX- Reglers;
- Bei der Zeitsteuerung muss das entsprechende Volumen entsprechend der vom Regler bestimmten Druckänderung Δρ bei der Volumenförderung berücksichtigt werden.

Die Figur 5 beschreibt eine weitere Ausführungsform der erfindungsgemäßen Druckversorgereinheit DE mit Druckregelung mit Hauptbremszylinder, Hauptbremszylinderventile HZV, Druckversorgung mit Doppelhubkolben Schalt- und Auslassventil(en).

Dabei ist der Hauptbremszylinder HZE mit je einem Bremskreis BKI und BKII verbunden. Für die Abtrennlogik gilt das gleiche wie bei Figur 1a. Die Vorhubkammer 4 des Doppelhubkolbens 3 ist mit Bremskreis BI über das Trennventil TV1 und mit BK II über das Trennventil TV2 verbunden. Die Rückhubkammer 4a über das Trennventil TV2b mit BK II und über HZE mit BK I. Die Übertragung wird vorzugsweise über den Schwimmkolben SK durchgeführt. Vorderkammer 4 und Rückhubkammer 4a können über ein Schaltventil ShV miteinander hydraulisch verbunden werden. Dieses Schaltventil SvH ermöglicht einen Kurzschluss zwischen beiden Kammer und wird insbesondere beim Vorhub (nach links) zur Reduzierung der hydraulisch wirksamen Fläche des Kolbens 3 genutzt. Die Rückhubkammer 4a des DHK 3 ist über das Schaltventil PD1 mit dem Vorratsbehälter 10 verbunden. Beide Kammern 4 und 4a sind zudem jeweils über ein Rückschlagventil mit dem Vorratsbehälter 10 verbunden. Diese Systemkonfiguration bietet folgende Freiheitsgrade:
- Druckaufbau und Druckabbau in allen Bremskreisen mit der Multiplexregelung (Druckregelung mit Druckvolumensteuerung) in allen Radbremszylindern simultan oder sequentiell über die Trennventile TV1, TV2 und PD1 und den Schaltventilen SV1-SV4 der Radbremsen RB1-RB4;
- Multiplexregelung im Druckaufbau und Druckabbau in Bremskreis I und Druckabbau im Bremskreis II über Auslassventile AV3, ZAV;
- Multiplexregelung beim gleichzeitigen Druckabbau in Bremskreis BK I und Druckaufbau im BK II über Doppelhubkolbensteuerung;
- Multiplexregelung im gleichzeitigen Druckabbau in Bremskreis BK II und Druckaufbau im BK I über Doppelhubkolbensteuerung;
- Jederzeit Druckabbau RB3 über AV3 bei Multiplexregelung.

Die Figur 5a zeigt exemplarisch einen Teil der Druckregelmöglichkeiten, die zeitlich parallel zu einander ablaufen können:
- Kontrollierter Druckabbau in RB1 über SV1, TV1 über Druckvolumensteuerung mittels Rückhub des Doppelhubkolbens 3 bei geöffneten PD1- Ventil oder alternativ oder Drucksteuerung des Druckabbau über Druckschätzung auf Basis der Phasenstrommessung im Bremskreis I;
- Kontrollierter Druckabbau in RB2 über SV2, TV1 über Druckvolumensteuerung mittels Rückhub des Doppelhubkolbens 3 bei geöffneten PD1- Ventil oder alternativ oder Drucksteuerung des Druckabbau über Druckschätzung auf Basis der Phasenstrommessung im Bremskreis I;
- Druckabbau in RB3 über AV3 mit Zeitsteuerung des Auslassventils AV3;
- Druckabbau in RB4 mittels Doppelhubkolben 3 mit Zeitsteuerung eines der Schaltventile SV4 bzw. PD1, wobei das jeweils andere Ventil ebenfalls zu dieser Zeit geöffnet sein muss oder alternativ Drucksteuerung des Druckabbau über Druckschätzung auf Basis der Druckmessung in Bremskreis II.

Bei simultanen Druckabbau pab bei unterschiedlichen Ausgangsdrücken kann optional von der MUX-Regelung abgewichen werden, in dem die Schaltventile SV1 und SV2 zeitversetzt geöffnet werden. Das Trennventil TV1 ist dabei beim Druckabbau durchgehend geöffnet. Da in RB1 ein höherer Druck herrscht, wird das Schaltventil SV1 vor dem Schaltventil SV2 geöffnet. Auf Basis des Wissens der Druckdifferenz (Raddruck RB1 und RB2 und Druck in der Vorhubkammer der Druckversorgereinheit) kann die Zeitsteuerung genau bemessen werden. Kann der Druck in der Vorhubkammer der Druckversorgereinheit DE nicht genau bestimmt werden, weil gleichzeitig ein Druckabbau über ZAV in Radbremse RB4 erfolgt und TV2 geschlossen ist, kann der Druck in der Vorhubkammer über Druckschätzung p/i aus dem Drehmoment des Elektromotors genutzt werden. Das Schaltventil SV2 wird dann genöffnet, wenn der Druck der Druckerzeugereinheit DE annähernd erreicht ist. Der weitere Druckabbau erfolgt dann simultan in beiden Radbremszylinder durch Steuerung über den Kolben 3 bei geöffneten SV1, SV2 und TV1. Wird der Zieldruck eines jeweiligen Rades erreicht, wird das entsprechende Ventil SV1 bzw. SV2 geschlossen. Ist ein weiterer Druckabbau in einem Rad gewünscht, kann ein weiterer Druckabbau dann nur in einer Radbremse erfolgen.

Parallel zur Druckabbausteuerung im MUX-Betrieb kann in BK II der Druck über Zeitsteuerung des AV3 abgebaut werden. Dies kann zeitlich frei bestimmt werden, weil über Schließen von SV3 die anderen Radbremszylinder nicht beeinflusst werden. Auch die zeitliche Ansteuerung des Druckabbaus in Radbremse RB4 kann bei Druckabbau des BK I im MUX-Betrieb frei gewählt werden.

Die Figur 5b zeigt exemplarisch einen Teil der Druckregelmöglichkeiten, die zeitlich parallel zu einander ablaufen können
- Kontrollierter Druckabbau in RB1 über die Schaltventile SV1 und TV1 über Druckvolumensteuerung mittels Rückhub des Doppelhubkolbens 3 bei geschlossenen PD1-Ventil;
- Kontrollierter Druckabbau in RB2 über die Schaltventile SV2 und TV1 über Druckvolumensteuerung mittels Rückhub des Doppelhubkolbens 3 bei geschlossenen PD1-Ventil;
- Druckabbau in RB3 über das Auslassventil AV3 mit Zeitsteuerung t (Öffnen des AV3-Ventil für den Zeitraum Δt);
- Druckaufbau in RB4 über das Trennventil TV2b (ZAV) mit Druckvolumensteuerung mittels Rückhub des Doppelhubkolbens bei geschlossenen PD1-Ventil.

Beim simultanen Druckabbau und Druckaufbau in Radbremse RB4 ist die Druckaufbaudynamik durch die Druckabbaudynamik und die wirksamen Kolbenflächen und hydraulischen Differenzdrücke bestimmt. Dies ist in der Regelung zu berücksichtigen. Wird der Zieldruck in Radbremse RB4 erreicht, wird das Schaltventil SV4 geschlossen. Soll der Druck in BKI weiter abgebaut werden, wird das PD1 für einen weiteren Druckabbau in Bremskreis I geöffnet. Figur 5c zeigt exemplarisch einen Teil der Druckregelmöglichkeiten, die zeitlich parallel zu einander ablaufen können:
- Kontrollierter Druckaufbau in RB1 über die Schaltventile SV1 und TV1 über Druckvolumensteuerung mittels Vorhub des Doppelhubkolbens 3 bei geöffneten PD1-Ventil;
- Kontrollierter Druckaufbau in RB2 über die Schaltventile SV2 und TV1 über Druckvolumensteuerung mittels Vorhub des Doppelhubkolbens 3 bei geöffneten PD1-Ventil;
- Druckabbau in RB3 über das Auslassventil AV3 mit Zeitsteuerung des Auslassventils AV3;
- Druckabbau in RB4 über den Doppelhubkolben 3 mit Zeitsteuerung des Schaltventils SV4 oder PD1-Ventil.

Für die vielen Funktionen des Druckabbaus pab in einem Bremskreis und Druckaufbau pauf in dem anderen Bremskreis besteht die Möglichkeit, dass sich der Schwimmkolben SK des Hauptbremszylinders HZE bewegt. Zur Verhinderung kann ein Sperrelement SE im BK1 oder BK2 angeordnet, das direkt auf den SK als mechanische Blockierung wirkt. Das Sperrelement kann auch Bestandteil des HZV sein.

Mit diesem Druckregelsystemlassen sich die in 5b und 5c beschriebenen Funktionen von pauf in einem Bremskreis und pab im anderen Bremskreis realisieren, unabhängig vom Druckniveau der Bremskreise.

Figur 5d zeigt exemplarisch den Druckabbau in Bremskreis I und Bremskreis II, der beim Druckabbau aus hohen Drücken eingesetzt wird. Dabei wird bei offenen Trennventilen TV1 und TV2 folgendes realisiert:
- Kontrollierter Druckaufbau in RB1 durch Zeitsteuerung der Ventile SV1 und PD3 über Drucksteuerung des Druckabbaus über Druckschätzung auf Basis der Phasenstrommessung im Bremskreis I;
- Kontrollierter Druckaufbau in RB2 durch Zeitsteuerung der Ventile SV2 und PD3 über Drucksteuerung des Druckabbaus über Druckschätzung auf Basis der Phasenstrommessung im Bremskreis I;
- Kontrollierter Druckaufbau in RB3 durch Zeitsteuerung der Ventile SV3 und PD3 über Drucksteuerung des Druckabbaus über Druckmessung auf Basis des Druckgebers in Bremskreis BK II;
- Kontrollierter Druckaufbau in RB4 durch Zeitsteuerung der Ventile SV4 und PD3 über Drucksteuerung des Druckabbaus über Druckmessung auf Basis des Druckgebers in Bremskreis BK II.

Für einen radindividuellen Druckabbau können ähnlich wie in Figur 5a dargestellt die Schaltventile SV1- SV4 zeitlich versetzt geschaltet werden.

Nicht dargestellt ist die Möglichkeit des Druckabbaus über PD1-Ventil, die nach dem ähnlichen Verfahren wie PD3-Ventil erfolgt. Der Druckabbau kann von allen Bremskreisen über PD1-Ventil erfolgen. Auch kann der Druckabbau sowohl über PD3 als auch PD1-Ventil erfolgen. Dies ist ähnlich wie Figur 5a mit dem Unterschied, dass der Druck aller Radbremsen über die Druckversorgereinheit abgebaut wird und somit die Vorteile eines Druckabbaus im geschlossen Bremskreis liefert, was insbesondere nach Abschluss eines Bremsvorganges (z. B. nach ABS-Betrieb) sicherheitstechnische Vorteile hat.

Die Figur 6 beschreibt ein System mit Doppelhubkolben in vorteilhafter zweikreisiger Ausführung. Der Aufbau von THZ, DE und Ventilschaltung für Drucksteuerung ABS mit MUX und AV ist identisch zu Figur 5c.

Im Gegensatz zur Figur 5c wirkt die Druckversorgung im Vorhub auf Bremskreis II und die Rückseite des Schwimmkolbens SK. Dieser überträgt das Volumen und den Druck in den Bremskreis I. Ist der Doppelhubkolben 3 nahe der Endstellung angelangt, wird er umgesteuert und im Rückhub betrieben und wirkt auf BK I. Dann wirkt über den Rückhub Druck auf die Vorderseite des Schwimmkolbens SK. Dieser Übertrag den Druck wiederum auf den Bremskreis BK II. Der SK-Kolben ist immer wie bei heuten THZ mit seinen Dichtungen aktiv.

Der Doppelhubkolben 3 hat zusätzlich ein Bypassventil ShV, welches im Wesentlichen unter drei Bedingungen geschaltet wird:
a) Bei hohem Druck wird zur Reduzierung der Kolbenkraft das Volumen des Vorhubes auch zum Druckausgleich auf die Rückseite des Doppelhubkolbens 3 geleitet;
b) Bei ABS-Regelung, auch MUX-Regelung, wird der Doppelhubkolben 3 auf einkreisig über das ShV-Ventil umgeschaltet;
c) Druckabbau pab aus hohen Druckniveau erfolgt in beiden Bremskreisen BK I und BK II gleichzeitig.

Diese Ventilschaltung hat für die Schwimmkolbenposition zur Folge, dass die Rückstellfeder 1 den Schwimmkolben SK an den rechten Anschlag bewegt oder in der Mittelstellung verharrt. Der Druckgeber 9 misst den Druck im BK II und kann bei "einkreisiger" Schaltung für die Regel- und Steuerfunktionen den Druck in beiden Bremskreisen auswerten.

Für spezielle Funktionen beim Druckaufbau pauf in BK I und Druckabbau pab in BK II und umgekehrt, ist es von Vorteil, in den BK II in der Verbindung zum THZ oder in Bremskreis BK 1 ein Sperrelement SE einzusetzen, welches die Bewegung des Schwimmkolbens SK verhindert. Das Sperrventil SE kann auch Bestandteil des HVZ sein.

Dieses System beinhaltet noch das zusätzliche Potential, den Druck in BK II über den DHK Kolben 3 und getrennt von BK I über die Ventile TV2b und PD1 abzubauen.

Diese Lösung hat Vorteile bei der Anwendung für unterschiedliche Druckniveauansteuerung an beiden Achsen bei Rekuperation. Hierzu muss dann das Sperrelement SE am SK oder im BK I eingesetzt werden.

Diese in Figuren 5-6 beschriebenen Funktionen neben der zusätzlichen überlagerten Zeitsteuerung über Auslassventil(e) geben dem erfindungsgemäßen MUX-System eine sehr gute Performance mit hoher Regelungsdynamik und - genauigkeit bei deutlich geringerem Aufwand als die radindividuelle Regelung mit Einlass- und Auslassventilen.

## Patentansprüche

1. Verfahren zum kontrollierten Druckabbau in Radbremsen (RB1, RB2, RB3, RB4) unter Verwendung einer Druckversorgungseinheit (DE), die eine Kolben-Zylinder-Einheit mit mindestens einem Kolben umfasst, wobei der Kolben mindestens einen Arbeitsraum (A1, A2) begrenzt, wobei das Verfahren die folgenden Schritte umfasst:
a) Herstellen einer fluiden Verbindung zwischen mindestens einer ersten der Radbremsen (RB1, RB2, RB3, RB4) und dem Arbeitsraum über ein der Radbremse zugeordnetes geöffnetes Schaltventil (SV1, SV2),
b) Betreiben des Kolbens (3) zur Vergrößerung des Volumens des Arbeitsraums (4), **gekennzeichnet durch**
c) Zeitsteuern eines einer zweiten der Radbremsen (RB1, RB2, RB3, RB4) zugeordneten Auslassventils (AV, AV1) für einen vorzugsweise simultanen Druckabbau in einen Vorratsbehälter.

2. Verfahren zum kontrollierten Druckabbau und Druckaufbau in Radbremsen (RB1, RB2, RB3, RB4) unter Verwendung einer Druckversorgungseinheit (DE), die eine Kolben-Zylinder-Einheit mit mindestens einem Kolben umfasst, wobei der Kolben mindestens einen Arbeitsraum (A1, A2) begrenzt, wobei das Verfahren die folgenden Schritte umfasst:
a) Herstellen einer fluiden Verbindung zwischen mindestens einer ersten der Radbremse (RB1, RB2, RB3, RB4) und dem Arbeitsraum über ein der Radbremse zugeordnetes geöffnetes Schaltventil (SV1, SV2),
b) Betreiben des Kolbens (3) zur Verkleinerung des Volumens des Arbeitsraums (4) und damit zum Druckaufbau in der ersten Radbremse, **gekennzeichnet durch**
c) Zeitsteuern eines einer zweiten der Radbremsen (RB1, RB2, RB3, RB4) zugeordneten Auslassventils (AV, AV1) für einen vorzugsweise simultanen Druckabbau in einen Vorratsbehälter.

3. Verfahren nach Anspruch 2,
**dadurch gekennzeichnet, dass**
der Kolben in Schritt b) zumindest zeitweise im Vorhub betrieben wird.

4. Verfahren nach einem der vorhergehenden Ansprüche,
**dadurch gekennzeichnet, dass**
der Kolben einen ersten und einen zweiten Arbeitsraum (A1, A2) begrenzt.

5. Verfahren zum kontrollierten Druckabbau und Druckaufbau in Radbremsen (RB1, RB2, RB3, RB4) unter Verwendung einer Druckversorgungseinheit (DE), die eine Kolben-Zylinder-Einheit mit mindestens einem Kolben umfasst, wobei der Kolben mindestens einen ersten und einen zweiten Arbeitsraum (A1, A2) teilt, wobei das Verfahren die folgenden Schritte umfasst:
a) Herstellen einer fluiden Verbindung zwischen mindestens einer ersten der Radbremsen (RB1, RB2, RB3, RB4) und dem ersten Arbeitsraum über ein geöffnetes Schaltventil (SV1, SV2, SV3, SV4),
b) Herstellen einer fluiden Verbindung zwischen mindestens einer zweiten der Radbremsen (RB1, RB2, RB3, RB4) und dem zweiten Arbeitsraum über ein geöffnetes Schaltventil (SV1, SV2, SV3, SV4), **gekennzeichnet durch**
c) Betreiben des Kolbens (3) zum zumindest zeitweisen gleichzeitigen Druckabbau in der ersten Radbremse und Druckaufbau in der zweiten Radbremse.

6. Verfahren nach einem der vorhergehenden Ansprüche, insbesondere nach Anspruch 5,
**dadurch gekennzeichnet, dass**
die erste Radbremse einem ersten Bremskreis (BKI, BKII ) und/oder die zweite Radbremse einem zweiten Bremskreis (BKI, BKII) zugeordnet ist.

7. Verfahren nach einem der vorhergehenden Ansprüche, insbesondere nach Anspruch 5,
**gekennzeichnet durch**:
ein Zeitsteuern eines einer dritten der Radbremsen (RB1, RB2, RB3, RB4) zugeordneten Auslassventils (AV, AV1) für einen vorzugsweise simultanen Druckabbau in einen Vorratsbehälter.

8. Verfahren nach einem der vorhergehenden Ansprüche, insbesondere nach Anspruch 7,
**gekennzeichnet durch**:
ein Schließen eines der dritten Radbremse (RB3) zugeordneten Schaltventils.

9. Verfahren nach einem der vorhergehenden Ansprüche
**dadurch gekennzeichnet, dass**
die Druckversorgungseinheit (DE) eine elektromotorisch angetriebene Druckversorgungseinheit ist.

10. Verfahren nach einem der vorhergehenden Ansprüche
**dadurch gekennzeichnet, dass**
der Kolben ein Doppelhubkolben mit zwei hydraulisch wirkenden Flächen ist, der einen Arbeitsraum in eine erste Arbeitskammer (4) und eine zweite Arbeitskammer (4a) teilt und im Vorhub und Rückhub betrieben wird.

11. Verfahren nach einem der vorhergehenden Ansprüche, insbesondere nach einem der Ansprüche 1 bis 5,
**dadurch gekennzeichnet, dass**
die wirksamen hydraulischen Flächen des Kolbens im Vorhub und Rückhub unterschiedlich sind, wobei durch Vorhub und Rückhub der Bremsdruck in mindestens einem der Bremskreise aufgebaut wird.

12. Verfahren nach Anspruch nach einem der vorhergehenden Ansprüche, **dadurch gekennzeichnet, dass**
bei der normalen Bremskraftverstärkung und/oder Rekuperation und/oder ABS auf niedrigen Fahrbahnreibwert (Low-µ) in allen Radbremsen bzw. Radbremszylindern der Druck über Wegsteuerung des Kolbens der Druckversorgereinheit unter Berücksichtigung der Druck-Volumen-Kennlinie(n) simultan oder sequentiell auf- und abgebaut wird.

13. Verfahren nach einem der vorhergehenden Ansprüche,
**dadurch gekennzeichnet, dass**
bei ABS-Betrieb mit hohen Dynamik-Anforderungen auf hohen Fahrbahnreibwert (high-µ) der Druck gleichzeitig und zeitlich versetzt über den Kolben der Druckversorgereinheit unter Berücksichtigung der Druck-Volumen-Kennlinie(n) als auch mittels Zeitsteuerung über mindestens ein Auslassventil abgebaut wird.

## Claims

1. Method for controlled pressure reduction in wheel brakes (RB1, RB2, RB3, RB4) using a pressure supply unit (DE), which comprises a piston-cylinder unit having at least one piston, wherein the piston delimits at least one working space (A1, A2), wherein the method comprises the following steps:
a) establishing a fluidic connection between at least one first one of the wheel brakes (RB1, RB2, RB3, RB4) and the working space via an open switching valve (SV1, SV2) assigned to the wheel brake,
b) operating the piston (3) to increase the volume of the working space (4), **characterized by**
c) time-controlling an outlet valve (AV, AV1) assigned to a second one of the wheel brakes (RB1, RB2, RB3, RB4) for a preferably simultaneous pressure reduction in a storage container.

2. Method for controlled pressure reduction and pressure buildup in wheel brakes (RB1, RB2, RB3, RB4) using a pressure supply unit (DE), which comprises a piston-cylinder unit having at least one piston, wherein the piston delimits at least one working space (A1, A2), wherein the method comprises the following steps:
a) establishing a fluidic connection between at least one first one of the wheel brakes (RB1, RB2, RB3, RB4) and the working space via an open switching valve (SV1, SV2) assigned to the wheel brake,
b) operating the piston (3) to decrease the volume of the working space (4) and thus to build up pressure in the first wheel brake, **characterized by**
c) time-controlling an outlet valve (AV, AV1) assigned to a second one of the wheel brakes (RB1, RB2, RB3, RB4) for a preferably simultaneous pressure reduction in a storage container.

3. Method according to claim 2,
**characterized in that**
the piston in step b) is at least temporarily operated in forward stroke.

4. Method according to any one of the preceding claims,
**characterized in that**
the piston delimits a first and a second working space (A1, A2).

5. Method for controlled pressure reduction and pressure buildup in wheel brakes (RB1, RB2, RB3, RB4) using a pressure supply unit (DE), which comprises a piston-cylinder unit having at least one piston, wherein the piston divides at least one first and one second working space (A1, A2), wherein the method comprises the following steps:
a) establishing a fluidic connection between at least one first one of the wheel brakes (RB1, RB2, RB3, RB4) and the first working space via an open switching valve (SV1, SV2, SV3, SV4),
b) establishing a fluidic connection between at least one second one of the wheel brakes (RB1, RB2, RB3, RB4) and the second working space via an open switching valve (SV1, SV2, SV3, SV4), **characterized by**
c) operating the piston (3) for at least temporary simultaneous pressure reduction in the first wheel brake and pressure buildup in the second wheel brake.

6. Method according to any one of the preceding claims, in particular according to claim 5, **characterized in that**
the first wheel brake is assigned to a first brake circuit (BKI, BKII) and/or the second wheel brake is assigned to a second brake circuit (BKI, BKII).

7. Method according to any one of the preceding claims, in particular according to claim 5, **characterized by**:
time control of an outlet valve (AV, AV1) assigned to a third one of the wheel brakes (RB1, RB2, RB3, RB4) for a preferably simultaneous pressure reduction in a storage container.

8. Method according to any one of the preceding claims, in particular according to claim 7, **characterized by**:
closing a switching valve assigned to the third wheel brake (RB3).

9. Method according to any one of the preceding claims,
**characterized in that**
the pressure supply unit (DE) is a pressure supply unit driven by electric motor.

10. Method according to any one of the preceding claims,
**characterized in that**
the piston is a double-stroke piston having two hydraulically active surfaces, which divides a working space into a first working chamber (4) and a second working chamber (4a) and is operated in forward stroke and return stroke.

11. Method according to any one of the preceding claims, in particular according to any one of claims 1 to 5,
**characterized in that**
the active hydraulic surfaces of the piston are different in forward stroke and return stroke, wherein the brake pressure is built up in at least one of the brake circuits by forward stroke and return stroke.

12. Method according to any one of the preceding claims,
**characterized in that**
in the case of the normal brake force boosting and/or recuperation and/or ABS at low roadway coefficient of friction (low-µ), the pressure is built up and reduced simultaneously or sequentially in all wheel brakes or wheel brake cylinders via path control of the piston of the pressure supply unit in consideration of the pressure-volume characteristic curve(s).

13. Method according to any one of the preceding claims,
**characterized in that**
in the case of ABS operation with high dynamic requirements at high roadway coefficient of friction (high-µ) the pressure is reduced simultaneously and offset in time via the piston of the pressure supply unit in consideration of the pressure-volume characteristic curve(s) by means of time control via at least one outlet valve.

## Revendications

1. Procédé pour la réduction contrôlée de la pression dans des freins de roue (RB1, RB2, RB3, RB4) à l'aide d'une unité de fourniture de pression (DE) qui comprend un vérin possédant au moins un piston qui délimite au moins un espace de travail (A1, A2), lequel procédé comprend les étapes suivantes :
a) établissement d'une communication pour la circulation de fluide entre au moins un premier des freins de roue (RB1, RB2, RB3, RB4) et l'espace de travail à l'aide d'une soupape d'inversion (SV1, SV2) ouverte qui est associée au frein de roue,
b) actionnement du piston (3) pour agrandir le volume de l'espace de travail (4), **caractérisé en ce qu'**il comprend
c) la commande temporisée d'une soupape d'échappement (AV, AV1) associée à un deuxième des freins de roue (RB1, RB2, RB3, RB4) pour réduire, de préférence simultanément, la pression dans un réservoir accumulateur.

2. Procédé pour la réduction de la pression et la pressurisation contrôlées de freins de roue (RB1, RB2, RB3, RB4) à l'aide d'une unité de fourniture de pression (DE) qui comprend un vérin possédant au moins un piston qui délimite au moins un espace de travail (A1, A2), lequel procédé comprend les étapes suivantes :
a) établissement d'une communication pour la circulation de fluide entre au moins un premier des freins de roue (RB1, RB2, RB3, RB4) et l'espace de travail à l'aide d'une soupape d'inversion (SV1, SV2) ouverte qui est associée au frein de roue,
b) actionnement du piston (3) pour réduire le volume de l'espace de travail (4) et pressuriser ainsi le premier frein de roue,
**caractérisé en ce qu'**il comprend
c) la commande temporisée d'une soupape d'échappement (AV, AV1) associée à un deuxième des freins de roue (RB1, RB2, RB3, RB4) pour réduire, de préférence simultanément, la pression dans un réservoir accumulateur.

3. Procédé selon la revendication 2, **caractérisé en ce que** le piston est actionné au moins par moments en avancement dans l'étape b).

4. Procédé selon l'une des revendications précédentes, **caractérisé en ce que** le piston délimite un premier espace de travail et un deuxième (A1, A2).

5. Procédé pour la réduction de la pression et la pressurisation contrôlées de freins de roue (RB1, RB2, RB3, RB4) à l'aide d'une unité de fourniture de pression (DE) qui comprend un vérin possédant au moins un piston qui divise au moins un premier espace de travail et un deuxième (A1, A2), lequel procédé comprend les étapes suivantes :
a) établissement d'une communication pour la circulation de fluide entre au moins un premier des freins de roue (RB1, RB2, RB3, RB4) et le premier espace de travail à l'aide d'une soupape d'inversion (SV1, SV2, SV3, SV4) ouverte,
b) établissement d'une communication pour la circulation de fluide entre au moins un deuxième des freins de roue (RB1, RB2, RB3, RB4) et le deuxième espace de travail à l'aide d'une soupape d'inversion (SV1, SV2, SV3, SV4) ouverte,
**caractérisé en ce qu'**il comprend
c) l'actionnement du piston (3) pour réduire au moins par moments la pression du premier frein de roue et augmenter simultanément la pression dans le deuxième frein de roue.

6. Procédé selon l'une des revendications précédentes, en particulier selon la revendication 5, **caractérisé en ce que** le premier frein de roue est associé à un premier circuit de freinage (BKI, BKII) et/ou le deuxième frein de roue à un deuxième circuit de freinage (BKI, BKII).

7. Procédé selon l'une des revendications précédentes, en particulier selon la revendication 5, **caractérisé en ce qu'**il comprend une commande temporisée d'une soupape d'échappement (AV, AV1) associée à un troisième des freins de roue (RB1, RB2, RB3, RB4) pour réduire, de préférence simultanément, la pression dans un réservoir accumulateur.

8. Procédé selon l'une des revendications précédentes, en particulier selon la revendication 7, **caractérisé en ce qu'**il comprend une fermeture d'une soupape d'inversion associée au troisième frein de roue (RB3).

9. Procédé selon l'une des revendications précédentes, **caractérisé en ce que** l'unité de fourniture de pression (DE) est une unité de fourniture de pression à moteur électrique.

10. Procédé selon l'une des revendications précédentes, **caractérisé en ce que** le piston est un piston à double action avec deux surfaces d'action hydraulique, qui divise un espace de travail en une première chambre de travail (4) et une deuxième chambre de travail (4a) et qui est actionné en avancement et en rétraction.

11. Procédé selon l'une des revendications précédentes, en particulier selon l'une des revendications 1 à 5, **caractérisé en ce que** les surfaces d'action hydraulique du piston en avancement et en rétraction sont différentes, l'avancement et la rétraction augmentant la pression de freinage dans au moins un des circuits de freinage.

12. Procédé selon l'une des revendications précédentes, **caractérisé en ce que**, à l'amplification normale de l'effort de freinage et/ou en récupération et/ou en ABS sur une voie de faible adhérence (low-µ), la pression dans tous les freins de roue ou cylindres de frein de roue est augmentée et diminuée simultanément ou successivement par la commande de la course du piston de l'unité de fourniture de pression, en tenant compte de la (des) caractéristique(s) pression-volume.

13. Procédé selon l'une des revendications précédentes, **caractérisé en ce que**, en mode ABS avec des exigences dynamiques élevées sur une voie de forte adhérence (high-µ), la pression est réduite simultanément et avec un décalage dans le temps sur les pistons de l'unité de fourniture de pression en tenant compte de la (des) caractéristique(s) pression-volume, ainsi qu'au moyen d'une commande temporisée via au moins une soupape d'échappement.
